# EUROPEAN PATENT APPLICATION

(11) **EP 4 734 637 A1**
(43) Date of publication of application: **29.04.2026**
(21) Application number: 24826233.9
(22) Date of filing: 18.06.2024
(51) Int. Cl.: H04W 72/0453, H04L 5/00, H04W 84/12, H04L 27/26

(54) **METHOD AND DEVICE FOR TRANSMISSION OR RECEPTION BASED ON DISTRIBUTED RESOURCE UNIT TONE PLAN IN WIRELESS LAN SYSTEM**

(30) Priority: 21.06.2023 KR 20230079850; 19.09.2023 KR 20230124858; 19.10.2023 KR 20230140479; 06.02.2024 KR 20240018211; 13.02.2024 KR 20240020538; 23.02.2024 KR 20240026698
(71) Applicant: LG Electronics Inc., Yeongdeungpo-gu Seoul 07336 (KR)
(72) Inventor: PARK, Eunsung, Seoul 06772 (KR); CHUN, Jinyoung, Seoul 06772 (KR); CHOI, Jinsoo, Seoul 06772 (KR); LIM, Dongguk, Seoul 06772 (KR)
(74) Representative: Jung, Minkyu
(86) International application number: PCT/KR2024/008413
(87) International publication number: WO 2024/262917

(57) **Abstract**

A method and a device for transmission or reception based on a distributed resource unit tone plan in a wireless LAN system is disclosed. A method performed by a first STA in a WLAN system, according to one embodiment of the present disclosure, may comprise the steps of: generating a PPDU including one or more fields, the one or more fields being mapped onto one or more DRUs; and transmitting the PPDU to one or more second STAs on a bandwidth. At this time, on the basis that the one or more DRUs include a 26-tone DRU, 26 tones constituting the 26-tone DRU can be distributively allocated to a channel in which the PPDU is transmitted within the bandwidth. Here, a pilot tone of the 26-tone DRU corresponds to a tone of a position to which one of candidate shift values is applied with respect to the position of a pre-defined pilot tone, and the number of candidate shift values can be determined on the basis of the number of pilot tones of a DRU of the largest size that can be supported in the channel.

## Description

### [TECHNICAL FIELD]

The present disclosure relates to a transmission or reception method and device based on a distributed resource unit tone plan in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical problem of the present disclosure is to provide a transmission or reception method and device based on a distributed resource unit tone plan in a WLAN system.

The technical object of the present disclosure is to provide a method and device for designing/defining a pilot subcarrier/tone in a distributed resource unit in a wireless LAN system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless local area network (WLAN) system according to an aspect of the present disclosure may comprise: generating a physical layer protocol data unit (PPDU) including one or more fields, the one or more fields being mapped to one or more distributed resource units (DRUs); and transmitting the PPDU in a bandwidth to one or more second STAs. In this case, based on the one or more DRUs including a 26-tone DRU, 26 tones included in the 26-tone DRU may be distributedly allocated to a channel over which the PPDU is transmitted within the bandwidth. Herein, pilot tones of the 26-tone DRU may correspond to tones at positions to which one of candidate shift values is applied to predefined pilot tone positions, and a number of the candidate shift values may be determined based on a number of pilot tones of a largest-size DRU supported in the channel.

A method performed by a second station (STA) in a wireless local area network (WLAN) system according to an additional aspect of the present disclosure may comprise: receiving, from a first STA, a physical layer protocol data unit (PPDU) including one or more field in a bandwidth; and decoding the one or more field mapped on one or more distributed resource units (DRUs). In this case, based on the one or more DRUs including a 26-tone DRU, 26 tones included in the 26-tone DRU may be distributedly allocated to a channel over which the PPDU is received within the bandwidth. Herein, pilot tones of the 26-tone DRU may correspond to tones at positions to which one of candidate shift values is applied to predefined pilot tone positions, and a number of the candidate shift values may be determined based on a number of pilot tones of a largest-size DRU supported in the channel.

### [Technical Effects]

According to the present disclosure, a transmission or reception method and device based on a distributed resource unit tone plan in a WLAN system may be provided.

According to the present disclosure, a method and device for designing/defining a pilot subcarrier/tone in a distributed resource unit in a wireless LAN system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIGS. 8 to 10 are diagrams for describing examples of resource units of a WLAN system to which the present disclosure may be applied.
FIG. 11 is a diagram for describing examples of a DRU to which the present disclosure may be applied.
FIG. 12 is a diagram representing the exemplary format of a trigger frame to which the present disclosure may be applied.
FIG. 13 is a diagram for describing an example of the first STA's DRU tone plan-based PPDU transmission method according to the present disclosure.
FIG. 14 is a diagram for describing an example of the second STA's DRU tone plan-based PPDU reception method according to the present disclosure.
FIG. 15 illustrates a tone plan for a 26-tone DRU in a 20 MHz bandwidth according to an embodiment of the present disclosure.
FIG. 16 illustrates a tone plan for a 26-tone DRU in a 40 MHz bandwidth according to an embodiment of the present disclosure.
FIG. 17 is a diagram for describing a PPDU transmission and reception procedure between a transmitting STA and a receiving STA according to an example of the present disclosure.

### [Mode for Invention]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

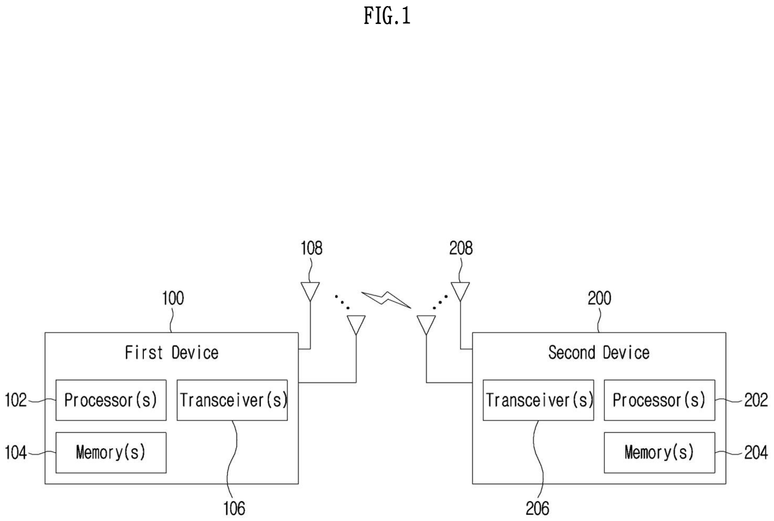

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

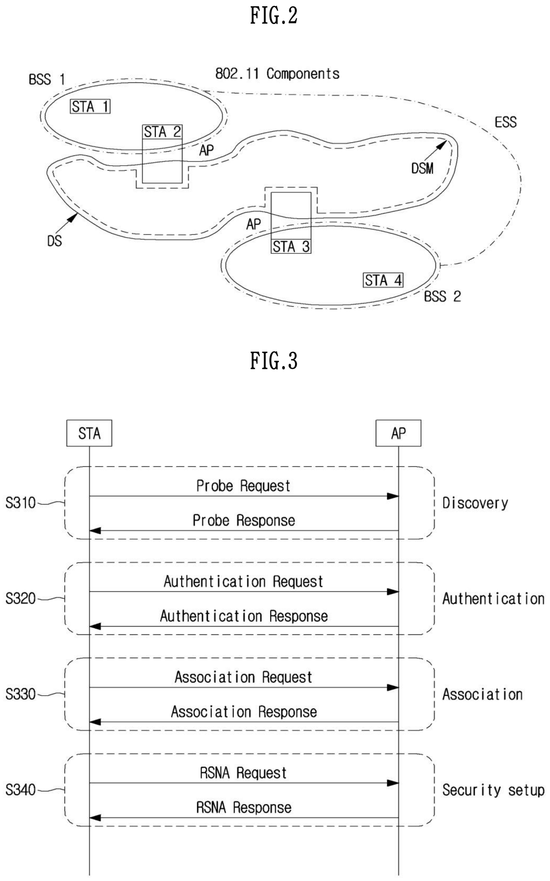

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

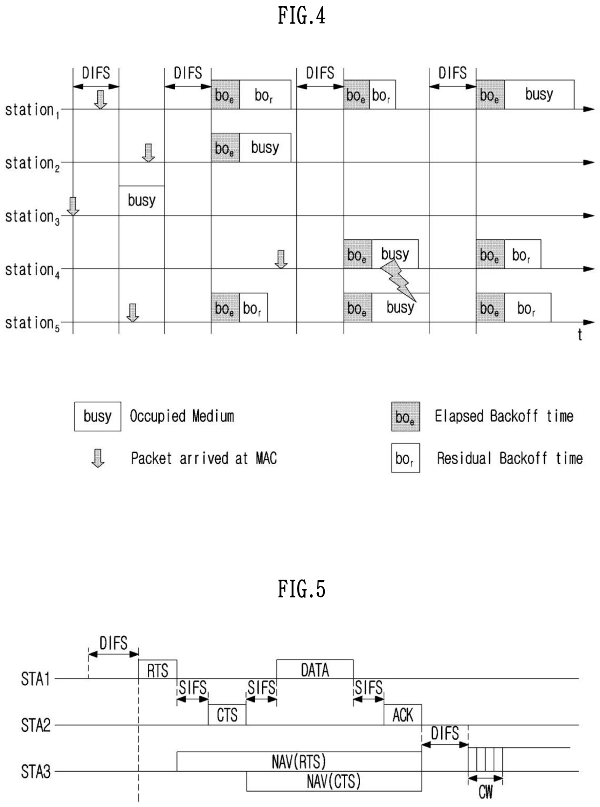

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

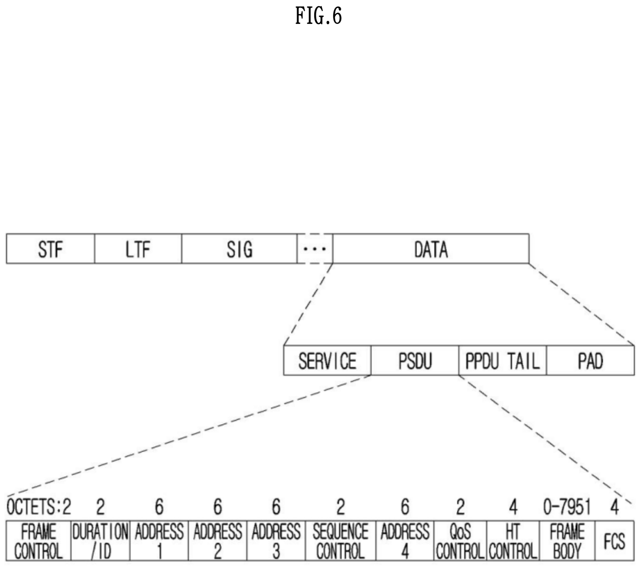

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

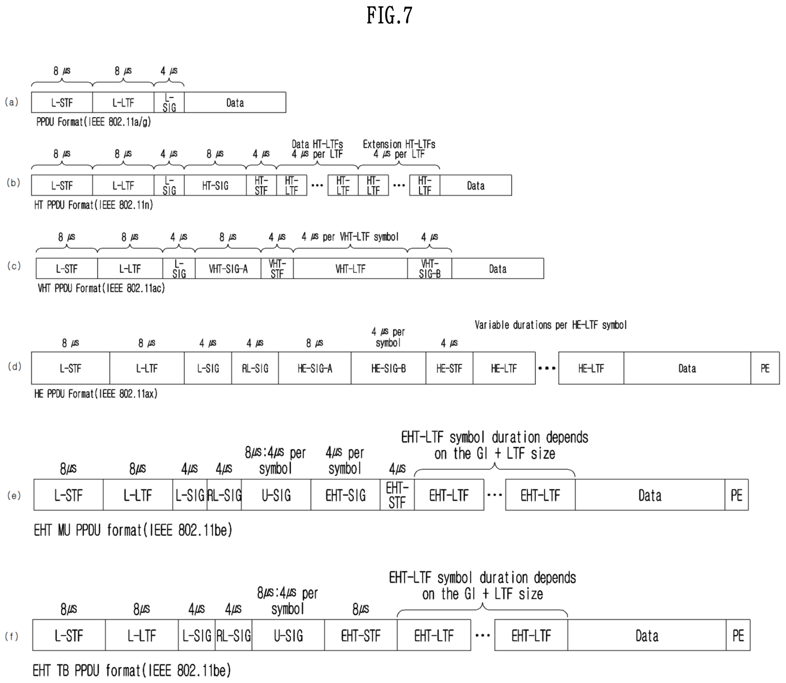

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Resource Unit

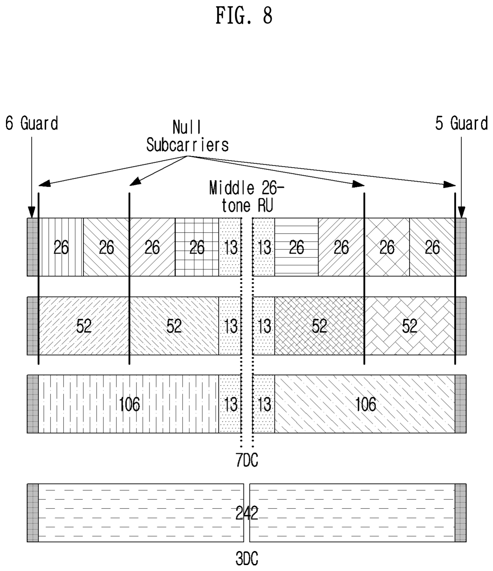

FIGS. 8 to 10 are diagrams for describing examples of resource units of a WLAN system to which the present disclosure may be applied.

Referring to FIGS. 8 to 10, a resource unit (RU) defined in a wireless LAN system will be described. the RU may include a plurality of subcarriers (or tones). The RU may be used when transmitting signals to multiple STAs based on the OFDMA scheme. In addition, the RU may be defined even when a signal is transmitted to one STA. The RU may be used for STF, LTF, data field of the PPDU, etc.

As shown in FIGS. 8 to 10, RUs corresponding to different numbers of tones (i.e., subcarriers) are used to construct some fields of 20 MHz, 40 MHz, or 80 MHz X-PPDUs (X is HE, EHT, etc.). For example, resources may be allocated in RU units shown for the X-STF, X-LTF, and Data field.

FIG. 8 is a diagram illustrating an exemplary allocation of resource units (RUs) used on a 20 MHz band.

As shown at the top of FIG. 8, 26-units (i.e., units corresponding to 26 tones) may be allocated. 6 tones may be used as a guard band in the leftmost band of the 20 MHz band, and 5 tones may be used as a guard band in the rightmost band of the 20 MHz band. In addition, 7 DC tones are inserted in the center band, that is, the DC band, and 26-units corresponding to each of the 13 tones may exist on the left and right sides of the DC band. In addition, 26-unit, 52-unit, and 106-unit may be allocated to other bands. Each unit may be allocated for STAs or users.

The RU allocation of FIG. 8 is utilized not only in a situation for multiple users (MU) but also in a situation for a single user (SU), and in this case, it is possible to use one 242-unit as shown at the bottom of FIG. 8. In this case, three DC tones may be inserted.

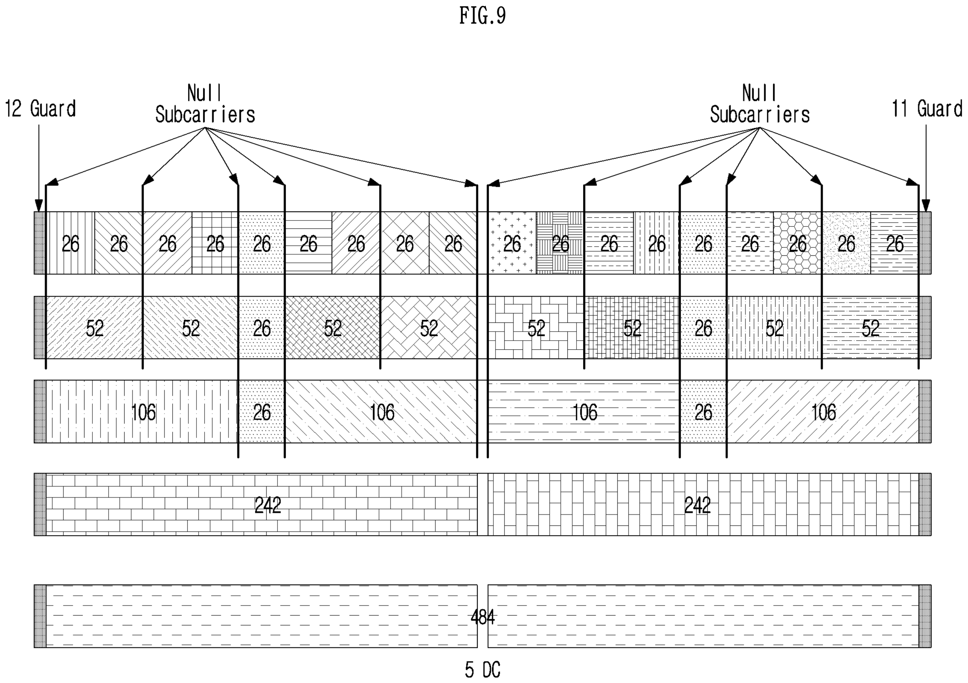

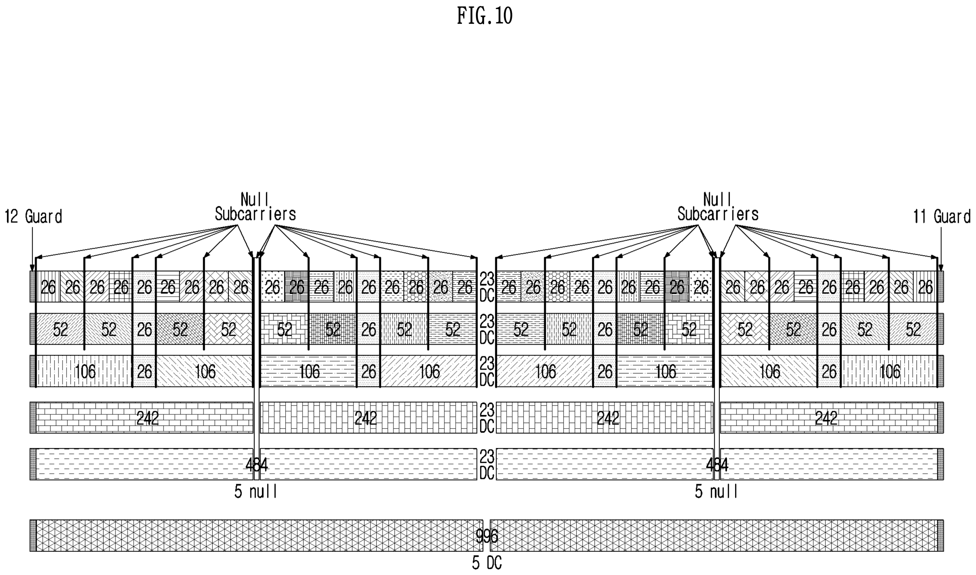

In the example of FIG. 8, RUs of various sizes, that is, 26-RU, 52-RU, 106-RU, 242-RU, etc. are exemplified, but the specific size of these RUs may be reduced or expanded. Therefore, in the present disclosure, the specific size of each RU (i.e., the number of corresponding tones) is exemplary and not restrictive. In addition, within a predetermined bandwidth (e.g., 20, 40, 80, 160, 320 MHz, ...) in the present disclosure, the number of RUs may vary according to the size of the RU. In the examples of FIG. 9 and/or FIG. 10 to be described below, the fact that the size and/or number of RUs may be varied is the same as the example of FIG. 8.

FIG. 9 is a diagram illustrating an exemplary allocation of resource units (RUs) used on a 40 MHz band.

Just as RUs of various sizes are used in the example of FIG. 8, 26-RU, 52-RU, 106-RU, 242-RU, 484-RU, and the like may be used in the example of FIG. 9 as well. In addition, 5 DC tones may be inserted at the center frequency, 12 tones may be used as a guard band in the leftmost band of the 40MHz band, and 11 tones may be used as a guard band in the rightmost band of the 40MHz band.

In addition, as shown, when used for a single user, a 484-RU may be used.

FIG. 10 is a diagram illustrating an exemplary allocation of resource units (RUs) used on an 80 MHz band.

Just as RUs of various sizes are used in the example of FIG. 8 and FIG. 9, 26-RU, 52-RU, 106-RU, 242-RU, 484-RU, 996-RU and the like may be used in the example of FIG. 10 as well. In addition, in the case of an 80 MHz PPDU, RU allocation of HE PPDUs and EHT PPDUs may be different, and the example of FIG. 10 shows an example of RU allocation for 80 MHz EHT PPDUs. The scheme that 12 tones are used as a guard band in the leftmost band of the 80 MHz band and 11 tones are used as a guard band in the rightmost band of the 80 MHz band in the example of FIG. 10 is the same in HE PPDU and EHT PPDU. Unlike HE PPDU, where 7 DC tones are inserted in the DC band and there is one 26-RU corresponding to each of the 13 tones on the left and right sides of the DC band, in the EHT PPDU, 23 DC tones are inserted into the DC band, and one 26-RU exists on the left and right sides of the DC band. Unlike the HE PPDU, where one null subcarrier exists between 242-RUs rather than the center band, there are five null subcarriers in the EHT PPDU. In the HE PPDU, one 484-RU does not include null subcarriers, but in the EHT PPDU, one 484-RU includes 5 null subcarriers.

In addition, as shown, when used for a single user, 996-RU may be used, and in this case, 5 DC tones are inserted in common with HE PPDU and EHT PPDU.

EHT PPDUs over 160 MHz may be configured with a plurality of 80 MHz subblocks in FIG. 10. The RU allocation for each 80 MHz subblock may be the same as that of the 80 MHz EHT PPDU of FIG. 10. If the 80 MHz subblock of the 160 MHz or 320 MHz EHT PPDU is not punctured and the entire 80 MHz subblock is used as part of RU or multiple RU (MRU), the 80 MHz subblock may use 996-RU of FIG. 10.

Here, the MRU corresponds to a group of subcarriers (or tones) composed of a plurality of RUs, and the plurality of RUs constituting the MRU may be RUs having the same size or RUs having different sizes. For example, a single MRU may be defined as 52+26-tone, 106+26-tone, 484+242-tone, 996+484-tone, 996+484+242-tone, 2X996+484-tone, 3X996-tone, or 3X996+484-tone. Here, the plurality of RUs constituting one MRU may correspond to small size (e.g., 26, 52, or 106) RUs or large size (e.g., 242, 484, or 996) RUs. That is, one MRU including a small size RU and a large size RU may not be configured/defined. In addition, a plurality of RUs constituting one MRU may or may not be consecutive in the frequency domain.

When an 80 MHz subblock includes RUs smaller than 996 tones, or parts of the 80 MHz subblock are punctured, the 80 MHz subblock may use RU allocation other than the 996-tone RU.

The RU of the present disclosure may be used for uplink (UL) and/or downlink (DL) communication. For example, when trigger-based UL-MU communication is performed, the STA transmitting the trigger (e.g., AP) may allocate a first RU (e.g., 26/52/106/242-RU, etc.) to a first STA and allocate a second RU (e.g., 26/52/106/242-RU, etc.) to a second STA, through trigger information (e.g., trigger frame or triggered response scheduling (TRS)). Thereafter, the first STA may transmit a first trigger-based (TB) PPDU based on the first RU, and the second STA may transmit a second TB PPDU based on the second RU. The first/second TB PPDUs may be transmitted to the AP in the same time period.

For example, when a DL MU PPDU is configured, the STA transmitting the DL MU PPDU (e.g., AP) may allocate a first RU (e.g., 26/52/106/242-RU, etc.) to a first STA and allocate a second RU (e.g., 26/52/106/242-RU, etc.) to a second STA. In other words, a transmitting STA (e.g., an AP) may transmit a X-STF (e.g., X is HE, EHT, etc.), a X-LTF and a data field for the first STA through the first RU within one MU PPDU, and may transmit a X-STF, a X-LTF and a data field for the second STA through the second RU. Information about the arrangement of a RU may be signaled through the X-SIG (e.g., X is HE, EHT, U) field of a X-PPDU format.

### Distributed Resource Unit

The limitations on power spectral density (PSD) may be applied in a sub-7GHz (e.g., 6GHz) band due to regulations in various regions. For a non-AP STA in a low power indoor (LPI) band, a PSD limitation may be -1dBm/MHz. For example, for the existing 52-tone RU, the maximum transmission (Tx) power may be approximately 6dBm.

In addition, different limitations may be applied in a 2.4GHz band and a 5GHz band. For example, in EU/China/Japan/Korea, a PSD limitation of 10dBm/MHz may be applied in a 2.4GHz band. For the existing 52-tone RU, the maximum Tx power may be approximately 17dBm. If a PSD limitation may be avoided in a 5GHz band, transmission power may be increased. For example, the maximum transmission power is 24dBm for the existing 52-tone RU, which is still lower by 6dBm than the maximum allowable effective isotropic radiated power (EIRP) of 30dBm.

When a PSD limitation is overcome, transmission power may be increased, thereby enhancing spectrum efficiency or extending a range.

Considering that a PSD limitation is defined per MHz for each STA, when the tones of a small RU are distributed on a wide bandwidth, tones for each STA are non-contiguous, so each tone may be transmitted with high power. A RU including tones distributed in this way is referred to as a distributed RU (DRU), and in order to distinguish from it, a RU including contiguous tones defined in an existing WLAN system (e.g., a system according to IEEE 802.11ax, 11be, etc.) may be referred to as a regular RU (RRU).

Compared to a STA transmitting an existing RRU, a STA transmitting a DRU may use high power. For example, a 52-tone DRU across 80MHz has only one tone per MHz, while for a 52-tone RRU, there are approximately 13 tones per MHz. When a PSD limitation of -1dBm/MHz is assumed in a 6GHz LPI band, for a 52-tone RU, transmission power may be increased by approximately 11dB when a DRU is used. When transmission power is increased in this way, higher MCS may be applied and a longer range may be supported.

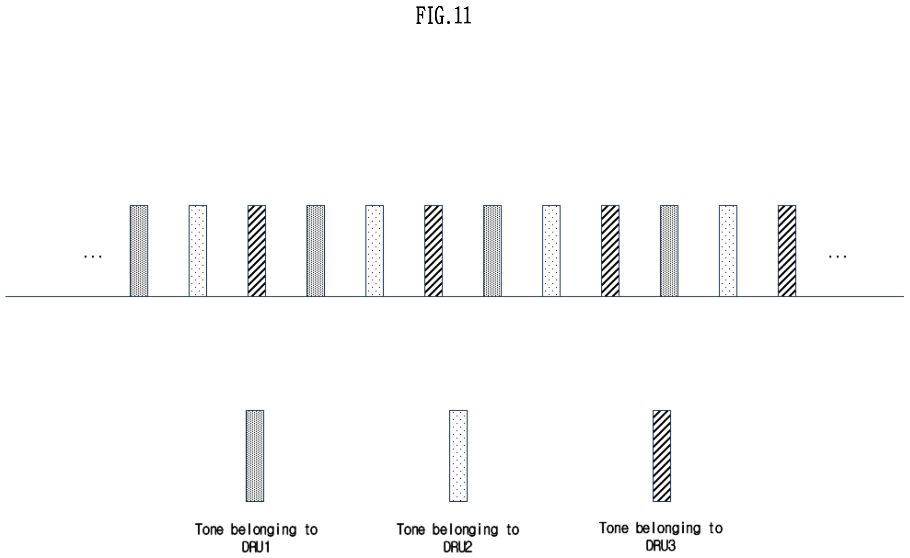

FIG. 11 is a diagram for describing examples of a DRU to which the present disclosure may be applied.

The example of FIG. 11 illustratively shows that STA1 performs transmission on DRU1, STA2 performs transmission on DRU2 and STA3 performs transmission on DRU3. Each STA may apply a transmission power boost by using a DRU. Compared to when a RRU in the same size is used, higher transmission power is applied to all tones in a DRU, and accordingly, spectral efficiency may be greatly improved. In this way, a DRU may be usefully applied particularly in UL-OFDMA.

In case of an AP, a DRU may also be utilized. In some cases, an AP may perform DL-OFDMA transmission to STA(s) by using only some of DRU1, DRU2 and DRU3, and in this case, a transmission power boost due to the use of a DRU may be applied.

In order to maximize a power boost, tones within one DRU may be distributed as far as possible. For example, a DRU including one tone per MHz may be considered an optimal example. The size of a DRU (or the number of available tones (i.e., the number of the remaining tones excluding unavailable tones such as a null tone, a guard tone, a DC tone, etc.) included in one DRU) may be defined to be the same as the size of a RRU (or the number of available tones included in one RRU). Accordingly, effects on various technologies defined previously based on a RRU may be minimized. A table below shows an example of an achievable power boost (in the unit of dB) for various DRUs distributed on a different bandwidth. The examples in a table below assume a 6GHz LPI band, and a power boost may also be obtained in a 2.4GHz band and a 5GHz band in other regions. For example, in 80MHz UL-OFDMA transmission by 8 users, when each user uses a 106-tone DRU, the overall performance may be enhanced by approximately 8.13dB compared to when each user uses a 106-tone RRU. In this way, a DRU may be used to overcome PSD limitations and obtain significant benefits.

**[Table 1]**

| | 20MHz Bandwidth | 40MHz Bandwidth | 80MHz Bandwidth |
|---|---|---|---|
| 26-tone RU | 8.13 | 11.14 | 11.14 |
| 52-tone RU | 6.37 | 8.13 | 11.14 |
| 106-tone RU | 3.36 | 6.37 | 8.13 |
| 242-tone RU | Not Applicable | 2.69 | 5.12 |
| 484-tone RU | Not Applicable | Not Applicable | 2.69 |

### Trigger Frame

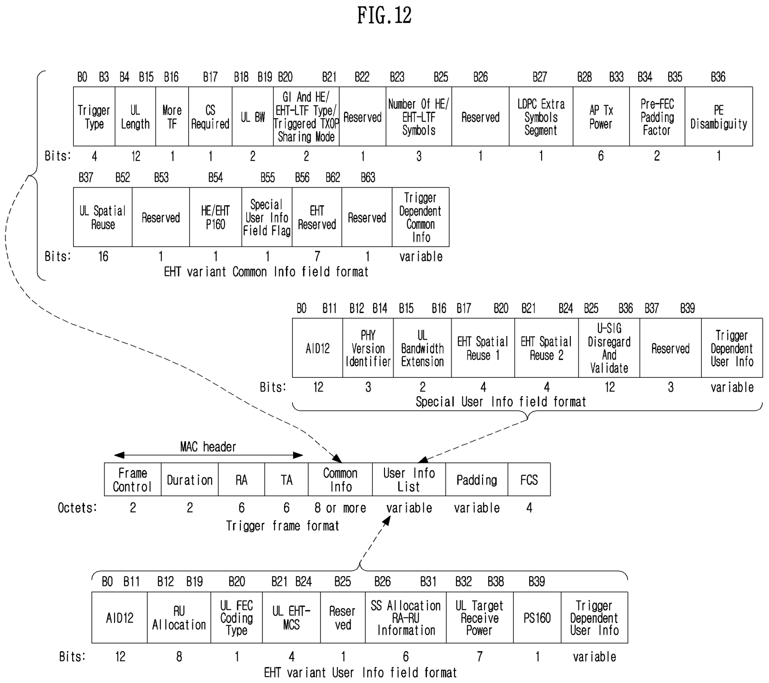

FIG. 12 is a diagram representing the exemplary format of a trigger frame to which the present disclosure may be applied.

A trigger frame may allocate a resource for at least one TB PPDU transmission and request TB PPDU transmission. A trigger frame may also include other information required by a STA transmitting a TB PPDU in response thereto. A trigger frame may include common information (common info) and user information list (user info list) fields in a frame body.

A common information field may include information that is commonly applied to at least one TB PPDU transmission requested by a trigger frame, e.g., a trigger type, a UL length, whether a subsequent trigger frame exists (e.g., More TF), whether channel sensing (CS) is required, a UL bandwidth (BW), etc. FIG. 12 illustratively shows an EHT variant common information field format.

A trigger type subfield of a 4-bit size may have a value of 0-15. Among them, 0, 1, 2, 3, 4, 5, 6 and 7, values of a trigger type subfield, are defined as corresponding to basic, BFRP (Beamforming Report Poll), MU-BAR (multi user-block acknowledgement request), MU-RTS (multi user-request to send), BSRP (Buffer Status Report Poll), GCR (groupcast with retries) MU-BAR, BQRP (Bandwidth Query Report Poll), and NFRP (NDP Feedback Report Poll), respectively, and values of 8-15 are defined as being reserved.

Among the common information, a trigger dependent common information subfield may include information that is selectively included based on a trigger type.

A special user information field may be included within a trigger frame. A special user information field does not include user-specific information, but includes extended common information that is not provided in a common information field.

A user information list includes at least 0 user information field. FIG. 12 illustratively shows an EHT variant user information field format.

An AID12 subfield basically represents that it is a user information field for a STA having a corresponding AID. In addition, when an AID12 field has a predetermined specific value, it may be utilized for other purposes such as allocating a random access (RA)-RU or being configured in the form of a special user information field. A special user information field is a user information field that does not include user-specific information but includes extended common information not provided in a common information field. For example, a special user information field may be identified by an AID12 value of 2007, and a special user information field flag subfield within a common information field may represent whether a special user information field is included.

A RU allocation subfield may represent the size and location of a RU/a MRU. For this purpose, a RU allocation subfield may be interpreted together with the PS160 (primary/secondary 160MHz) subfield of a user information field, the UL BW subfield of a common information field, etc.

For example, as shown in Table 2 below, the mapping of B7-B1 of a RU allocation subfield may be defined together with the settings of the B0 and PS160 subfields of a RU allocation subfield. Table 2 shows an example of encoding the PS160 subfield and the RU allocation subfield of an EHT variant user information field.

**[Table 2]**

| **PS160 subfield** | **B0 of the RU Allocation subfleld** | **B7-B1 of the RU Allocation subfield** | **Bandwidth (MHz)** | **RU/MRU size** | **RU/MRU index** | **PHY RU/ MRU index** |
|---|---|---|---|---|---|---|
| 0-3: 80 MHz segment where the RU is located | | 0-8 | 20, 40, 80, 160, or 320 | 26 | RU1 to RU9, respectively | 37×*N*+RU index |
| | | 9-17 | 40, 80, 160, or 320 | | RU10 to RU18, respectively | |
| | | 18 | 80, 160, or 320 | | Reserved | |
| | | 19-36 | 80, 160, or 320 | | RU20 to RU37 respectively | |
| | | 37-40 | 20, 40, 80, 160, or 320 | 52 | RU1 to RU4, respectively | 16×*N* + RU index |
| | | 41-44 | 40, 80, 160, or 320 | | RU5 to RU8, respectively | |
| | | 45-52 | 80, 160, or 320 | | RU9 to RU16, respectively | |
| | | 53, 54 | 20, 40, 80, 160, or 320 | 106 | RU1 and RU2, respectively | 8×*N* + RU index |
| | | 55, 56 | 40, 80, 160, or 320 | | RU3 and RU4. respectively | |
| | | 57-60 | 80, 160, or **320** | | RU5 to RU8, respectively | |
| | | 61 | 20, 40, 80, 160, or 320 | 242 | RU1 | 4×*N* + RU index |
| | | 62 | 40, 80, 160, or 320 | | RU2 | |
| | | 63.64 | 80, 160. or 320 | | RU3 and RU4. respectively | |
| | | 65 | 40, 80, 160, or 320 | 484 | RU1 | 2×*N* + RU index |
| | | 66 | 80, 160, or 320 | | RU2 | |
| | | 67 | 80, 160, or 320 | 996 | RU1 | N+ RU index |
| 0-1: 160 MHz segment where the RU is located | 0 | 68 | Reserved | | | Reserved |
| | 1 | | 160 or 320 | 2×996 | RU1 | X1 + RU index |
| 0 | 0 | 69 | Reserved | | | Reserved |
| 0 | 1 | | | | | |
| 1 | 0 | | | | | |
| 1 | 1 | | 320 | 4×996 | RU1 | RU1 |
| 0-3: 80 MHz segment where the RU is located | | 70-72 | 20, 40, 80, 160, or 320 | 52+26 | MRU1 to MRU3, respectively | 12×*N*+ MRU index |
| | | 73-75 | 40, 80, 160, or 320 | 52+26 | MRU4 to MRU6, respectively | |
| | | 76-81 | 80, 160, or 320 | 52+26 | MRU7 to MRU12, respectively | |
| | | 82, 83 | 20, 40, 80, 160, or 320 | 106+26 | MRU1 and MRU2, respectively | 8×*N* + MRU index |
| | | 84, 85 | 40, 80. 160, or 320 | 106+26 | MRU3 and MRU4, respectively | |
| | | 86-89 | 80, 160, or 320 | 106+26 | MRUS to MRU8, respectively | |
| | | 90-93 | 80, 160, or 320 | 484+242 | MRU1 to MRU4, respectively | 4×*N* + MRU index |
| 0-1: 160 MHz segment where the MRU is located | 0 | 94, 95 | 160 or 320 | 996+484 | MRU1 and MRU2. respectively | 4×X1 + MRU index |
| | 1 | | | | MRU3 and MRU4, respectively | |
| 0-1: 160 MHz segment where the MRU is located | 0 | 96-99 | 160 or 320 | 996+484+ 242 | MRU1 to MRU4, respectively | 8×X1 + MRU index |
| | 1 | | | | MRU5 to MRU8, respectively | |
| 0 | 0 | 100-103 | 320 | 2×996 +484 | MRU1 to MRU4, respectively | MRU index |
| 0 | 1 | | | | MRU5 and MRU6, respectively | |
| 1 | 0 | | | | MRU7 and MRU8, respectively | |
| 1 | 1 | | | | MRU9 to MRU12, respectively | |
| 0 | 0 | 104 | 320 | 3×996 | MRU1 | MRU index |
| 0 | 1 | | | | MRU2 | |
| 1 | 0 | | | | MRU3 | |
| 1 | 1 | | | | MRU4 | |
| 0 | 0 | 105, 106 | 320 | 3×996 1484 | MRU1 and MRU2, respectively | MRU index |
| 0 | 1 | | | | MRU3 and MRU4, respectively | |
| 1 | 0 | | | | MRUS and MRU6, respectively | |
| 1 | 1 | | | | MRU7 and MRU8, respectively | |
| Any | Any | 107-127 | Any | Reserved | Reserved | Reserved |

When B0 of a RU allocation subfield is set as 0, it may represent that RU/MRU allocation is applied to a primary 80MHz channel, and when its value is set as 1, it may represent that RU allocation is applied to the secondary 80MHz channel of primary 160MHz. When B0 of a RU allocation subfield is set as 0, it may represent that RU/MRU allocation is applied to the lower 80MHz of secondary 160MHz, and when its value is set as 1, it may represent that RU allocation is applied to the upper 80MHz of secondary 160MHz.

In the trigger frame RU allocation table of Table 2, parameter N may be calculated based on the formula of N=2*X1+X0. For a bandwidth less than or equal to 80MHz, values of PS160, B0, X0 and X1 may be set as 0. For a 160MHz bandwidth and a 320MHz bandwidth, values of PS160, B0, X0 and X1 may be set as shown in Table 3. This configuration represents the absolute frequency order for primary and secondary 80MHz and 160MHz channels. The order from left to right represents the order from low frequency to high frequency. A primary 80MHz channel is indicated as P80, a secondary 80MHz channel is indicated as S80, and a secondary 160MHz channel is indicated as S160.

**[Table 3]**

| **Bandwidth (MHz)** | **Inputs** | | | **Outputs** | | |
|---|---|---|---|---|---|---|
| | **Configuration** | **PS160** | **B0** | **X0** | **X1** | **N** |
| 20/40/80 | [P80] | 0 | 0 | 0 | 0 | 0 |
| 160 | [P80 S80] | 0 | 0 | 0 | 0 | a |
| | | 0 | 1 | 1 | 0 | 1 |
| | [S80 P80] | 0 | 0 | 1 | 0 | 1 |
| | | 0 | 1 | 0 | 0 | 0 |
| 320 | [P80 S80 S160] | 0 | 0 | 0 | 0 | 0 |
| | | 0 | 1 | 1 | 0 | 1 |
| | | 1 | 0 | 0 | 1 | 2 |
| | | 1 | 1 | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| | | I | 1 | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

### Method for designing/defining pilot tones in various DRU tone plans

As described above, in order to overcome PSD limitations and improve the power gain, a DRU using a distributed tone/subcarrier, not a RRU using a contiguous tone/subcarrier, may be applied.

In the present disclosure, for DRU-based transmission/reception through a PPDU in bandwidths of various sizes, a method for designing/defining pilot tones used in each DRU in relation to DRU tone plans of various sizes is described.

In conventionally defined RUs (i.e., RRUs), pilot tones are defined according to the size of the RRU as follows.

26-tone RRU: for the 26 tones constituting the corresponding RRU, [6th tone, 20th tone], [7th tone, 21st tone], or [7th tone, 20th tone] (i.e., two pilot tones).

52-tone RRU: for the 52 tones constituting the corresponding RRU, [6th tone, 20th tone, 32nd tone, 46th tone] or [7th tone, 21st tone, 33rd tone, 47th tone] (i.e., four pilot tones).

106-tone RRU: for the 106 tones constituting the corresponding RRU, [7th tone, 33rd tone, 75th tone, 101st tone] or [6th tone, 32nd tone, 74th tone, 100th tone] (i.e., four pilot tones).

242-tone RRU: for the 242 tones constituting the corresponding RRU, [7th tone, 33rd tone, 75th tone, 101st tone, 141st tone, 167th tone, 209th tone, 235th tone] or [8th tone, 34th tone, 76th tone, 102nd tone, 142nd tone, 168th tone, 210th tone, 236th tone] (i.e., eight pilot tones).

484-tone RRU: for the 484 tones constituting the corresponding RRU, [7th tone, 33rd tone, 75th tone, 101st tone, 141st tone, 167th tone, 209th tone, 235th tone, 250th tone, 276th tone, 318th tone, 344th tone, 384th tone, 410th tone, 452nd tone, 478th tone] (i.e., sixteen pilot tones).

996-tone RRU: for the 996 tones constituting the corresponding RRU, [33rd tone, 101st tone, 167th tone, 235th tone, 281st tone, 349th tone, 415th tone, 483rd tone, 514th tone, 582nd tone, 648th tone, 716th tone, 762nd tone, 830th tone, 896th tone, 964th tone] (i.e., sixteen pilot tones).

Pilot tones are for compensating residual carrier frequency offset (CFO), and therefore, a method for designing/defining pilot tones for DRUs of various sizes is required.

In the present disclosure, a method for designing/defining new pilot tones for DRUs of various sizes and a method for designing/defining pilot tones for DRUs of various sizes by utilizing existing pilot tones (e.g., pilot tones defined for RRUs) are proposed.

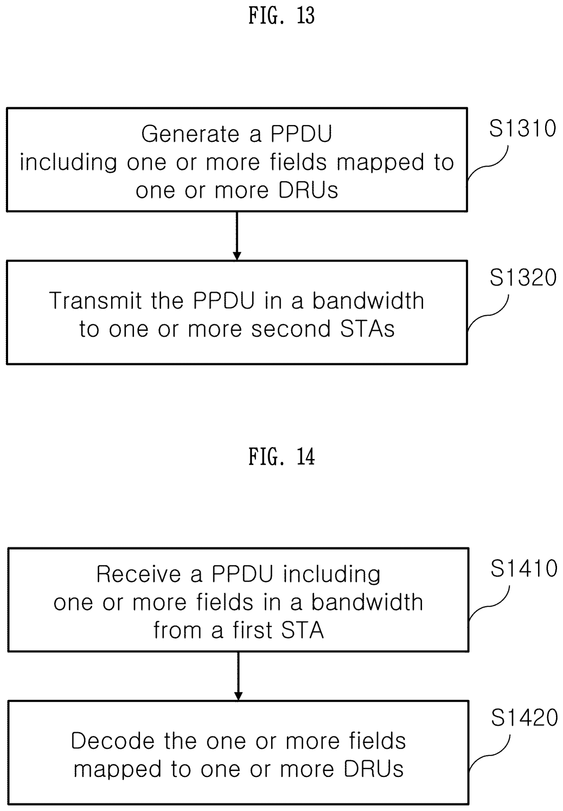

FIG. 13 is a diagram for describing an example of the first STA's DRU tone plan-based PPDU transmission method according to the present disclosure.

In S1310, the first STA may generate a PPDU including at least one field mapped on at least one DRU.

For example, at least one field may include a data field. In other words, the data field of a PPDU may be generated by being mapped on at least one DRU of various sizes.

In this regard, if one or more DRUs include a 26-tone DRU, the 26 tones constituting the 26-tone DRU may be distributedly allocated to the channel on which a PPDU is transmitted within the bandwidth. For example, the 26-tone DRU may be one of N predefined 26-tone DRUs for the corresponding channel, and the n-th (n = 1, 2, ..., N) 26-tone DRU may include the nth lowest tone among available tones in the channel and may be defined as every N-th tone based on the n-th lowest tone. Here, the available tones may be tones excluding one or more of a direct current (DC) tone, a null tone, or a guard tone in the channel.

In this case, pilot tones of the 26-tone DRU may correspond to tones located at positions to which one of candidate shift values (e.g., values within a range greater than or equal to -6 and less than or equal to +6) is applied with respect to positions of predefined pilot tones. For example, the positions of the predefined pilot tones may correspond to one of (7th tone and 20th tone), (6th tone and 20th tone), or (7th tone and 21st tone) among the 26 tones constituting the 26-tone DRU.

Additionally, the number of candidate shift values may be determined based on the number of pilot tones of the largest DRU size supported in the corresponding channel.

For example, the number of candidate shift values may be a value obtained by dividing the number of pilot tones of the largest DRU size supported in the corresponding channel by two. As a specific example, if the size of the corresponding channel is 20 MHz, the number of candidate shift values is two; if the size of the corresponding channel is 40 MHz, the number of candidate shift values is four; if the size of the corresponding channel is 80 MHz, the number of candidate shift values is eight; and if the size of the corresponding channel is 160 MHz, the number of candidate shift values may be eight.

Specifically, in the case of a 20 MHz channel, for nine predefined 26-tone DRUs, a first candidate shift value may be defined to be applied to a first group including a first 26-tone DRU, a second 26-tone DRU, a third 26-tone DRU, and a fourth 26-tone DRU, and a second candidate shift value may be defined to be applied to a second group including a sixth 26-tone DRU, a seventh 26-tone DRU, an eighth 26-tone DRU, and a ninth 26-tone DRU.

Additionally, when one or more DRUs include a 52-tone DRU, the 52-tone DRU may be one of four predefined 52-tone DRUs for a 20 MHz channel. In this case, pilot tones of the first 52-tone DRU are composed of a combination of the pilot tones of the first 26-tone DRU and the pilot tones of the sixth 26-tone DRU, pilot tones of the second 52-tone DRU are composed of a combination of the pilot tones of the second 26-tone DRU and the pilot tones of the seventh 26-tone DRU, pilot tones of the third 52-tone DRU are composed of a combination of the pilot tones of the third 26-tone DRU and the pilot tones of the eighth 26-tone DRU, and pilot tones of the fourth 52-tone DRU may be composed of a combination of the pilot tones of the fourth 26-tone DRU and the pilot tones of the ninth 26-tone DRU.

Additionally, if one or more DRUs include a 106-tone DRU, the 106-tone DRU may be one of two predefined 106-tone DRUs for a 20 MHz channel. In this case, pilot tones of the first 106-tone DRU are composed of four pilot tones selected from among eight pilot tones of odd-numbered 26-tone DRUs belonging to the first group and the second group, and pilot tones of the second 106-tone DRU may be composed of four pilot tones selected from among eight pilot tones of even-numbered 26-tone DRUs belonging to the first group and the second group. In this regard, the four pilot tones of the first 106-tone DRU may be a combination of two pilot tones of one of two odd-numbered 26-tone DRUs belonging to the first group and two pilot tones of one of two odd-numbered 26-tone DRUs belonging to the second group. Further, the four pilot tones of the second 106-tone DRU may be a combination of two pilot tones of one of two even-numbered 26-tone DRUs belonging to the first group and two pilot tones of one of two even-numbered 26-tone DRUs belonging to the second group.

In the case of a 40 MHz channel, for eighteen predefined 26-tone DRUs, a first candidate shift value may be defined to be applied to a first group including a 1st 26-tone DRU, a 2nd 26-tone DRU, a 6th 26-tone DRU, and a 7th 26-tone DRU. A second candidate shift value may be defined to be applied to a second group including a 3rd 26-tone DRU, a 4th 26-tone DRU, an 8th 26-tone DRU, and a 9th 26-tone DRU. A third candidate shift value may be defined to be applied to a third group including a 10th 26-tone DRU, an 11th 26-tone DRU, a 15th 26-tone DRU, and a 16th 26-tone DRU. A fourth candidate shift value may be defined to be applied to a fourth group including a 12th 26-tone DRU, a 13th 26-tone DRU, a 17th 26-tone DRU, and an 18th 26-tone DRU.

In the case of an 80 MHz channel, for thirty-six predefined 26-tone DRUs, a first candidate shift value may be defined to be applied to a first group including a 1st 26-tone DRU, a 2nd 26-tone DRU, a 10th 26-tone DRU, and an 11th 26-tone DRU. A second candidate shift value may be defined to be applied to a second group including a 3rd 26-tone DRU, a 4th 26-tone DRU, a 12th 26-tone DRU, and a 13th 26-tone DRU. A third candidate shift value may be defined to be applied to a third group including a 6th 26-tone DRU, a 7th 26-tone DRU, a 15th 26-tone DRU, and a 16th 26-tone DRU. A fourth candidate shift value may be defined to be applied to a fourth group including an 8th 26-tone DRU, a 9th 26-tone DRU, a 17th 26-tone DRU, and an 18th 26-tone DRU. A fifth candidate shift value may be defined to be applied to a fifth group including a 19th 26-tone DRU, a 20th 26-tone DRU, a 28th 26-tone DRU, and a 29th 26-tone DRU. A sixth candidate shift value may be defined to be applied to a sixth group including a 21st 26-tone DRU, a 22nd 26-tone DRU, a 30th 26-tone DRU, and a 31st 26-tone DRU. A seventh candidate shift value may be defined to be applied to a seventh group including a 24th 26-tone DRU, a 25th 26-tone DRU, a 33rd 26-tone DRU, and a 34th 26-tone DRU. An eighth candidate shift value may be defined to be applied to an eighth group including a 26th 26-tone DRU, a 27th 26-tone DRU, a 35th 26-tone DRU, and a 36th 26-tone DRU.

In the case of a 160 MHz channel, for seventy-two predefined 26-tone DRUs, a first candidate shift value may be defined to be applied to a first group including a 1st 26-tone DRU, a 2nd 26-tone DRU, a 3rd 26-tone DRU, a 4th 26-tone DRU, a 19th 26-tone DRU, a 20th 26-tone DRU, a 21st 26-tone DRU, and a 22nd 26-tone DRU. A second candidate shift value may be defined to be applied to a second group including a 6th 26-tone DRU, a 7th 26-tone DRU, an 8th 26-tone DRU, a 9th 26-tone DRU, a 24th 26-tone DRU, a 25th 26-tone DRU, a 26th 26-tone DRU, and a 27th 26-tone DRU. A third candidate shift value may be defined to be applied to a third group including a 10th 26-tone DRU, an 11th 26-tone DRU, a 12th 26-tone DRU, a 13th 26-tone DRU, a 28th 26-tone DRU, a 29th 26-tone DRU, a 30th 26-tone DRU, and a 31st 26-tone DRU. A fourth candidate shift value may be defined to be applied to a fourth group including a 15th 26-tone DRU, a 16th 26-tone DRU, a 17th 26-tone DRU, an 18th 26-tone DRU, a 33rd 26-tone DRU, a 34th 26-tone DRU, a 35th 26-tone DRU, and a 36th 26-tone DRU. A fifth candidate shift value may be defined to be applied to a fifth group including a 37th 26-tone DRU, a 38th 26-tone DRU, a 39th 26-tone DRU, a 40th 26-tone DRU, a 55th 26-tone DRU, a 56th 26-tone DRU, a 57th 26-tone DRU, and a 58th 26-tone DRU. A sixth candidate shift value may be defined to be applied to a sixth group including a 42nd 26-tone DRU, a 43rd 26-tone DRU, a 44th 26-tone DRU, a 45th 26-tone DRU, a 60th 26-tone DRU, a 61st 26-tone DRU, a 62nd 26-tone DRU, and a 63rd 26-tone DRU. A seventh candidate shift value may be defined to be applied to a seventh group including a 46th 26-tone DRU, a 47th 26-tone DRU, an 48th 26-tone DRU, a 49th 26-tone DRU, a 64th 26-tone DRU, a 65th 26-tone DRU, a 66th 26-tone DRU, and a 67th 26-tone DRU. An eighth candidate shift value may be defined to be applied to an eighth group including a 51st 26-tone DRU, a 52nd 26-tone DRU, a 53rd 26-tone DRU, a 54th 26-tone DRU, a 69th 26-tone DRU, a 70th 26-tone DRU, a 71st 26-tone DRU, and a 72nd 26-tone DRU.

In step S1320, the 1st STA may transmit a PPDU to one or more 2nd STAs over the bandwidth.

The at least one DRU may be indicated based on RU allocation information included in a corresponding PPDU. For example, a corresponding PPDU may be a downlink PPDU (or a DL-OFDMA PPDU).

Alternatively, at least one DRU may be indicated based on RU allocation information included in a trigger frame triggering the transmission of a corresponding PPDU. For example, a corresponding PPDU may be a TB PPDU (or a UL-OFDMA PPDU).

A method described in the example of FIG. 13 may be performed by a first device 100 in FIG. 1. For example, at least one processor 102 of the first device 100 of FIG. 1 may be configured to generate a PPDU including at least one field mapped on at least one DRU and transmit a PPDU to at least one second STA on a bandwidth including a 160MHz channel. Furthermore, at least one memory 104 of a first device 100 may store instructions for performing a method described in the example of FIG. 13 or examples described below when executed by at least one processor 102.

FIG. 14 is a diagram for describing an example of the second STA's DRU tone plan-based PPDU reception method according to the present disclosure.

In step S1410, the second STA may receive, from the first STA, a PPDU including one or more fields over the bandwidth.

In S1420, the second STA may decode at least one field mapped on at least one DRU.

For example, the second STA may determine the number and location of tones/subcarriers of at least one DRU to which at least one field (e.g., data field) is mapped in a PPDU transmitted by the first STA based on RU allocation information included in a corresponding PPDU or based on RU allocation information included in a trigger frame triggering the transmission of a corresponding PPDU. Based thereon, the second STA may decode at least one field mapped to the at least one DRU.

The details regarding the configuration of pilot tones, the application/configuration of candidate shift values, the positions of predefined pilot tones, specific pilot-tone shift schemes, and the pilot-tone configuration of DRUs in each bandwidth are identical to the descriptions provided in the example of FIG. 13, and therefore duplicate descriptions will not be repeated.

The examples of FIGS. 13 and 14 may correspond to some of the various examples of the present disclosure. Hereinafter, various examples of the present disclosure including the example of FIGS. 13 and 14 will be described in more detail.

In the embodiments described below, it is assumed that the number of pilot tones used in each DRU is identical to the number of pilot tones used in an RRU of the same size. It is also assumed that, in the DRU tone plan for each bandwidth, the number and positions of DC subcarriers, null subcarriers, and guard subcarriers are identical to those in the RRU tone plan for the corresponding bandwidth. In this regard, subcarriers other than the DC subcarrier, null subcarriers, and guard subcarriers within the bandwidth may be referred to as available subcarriers.

In addition, in embodiments described below, a DRU index (i.e., DRU-n) or the n-th DRU may correspond to a location in a frequency domain, or may be assigned regardless of a location in a frequency domain. In embodiments described below, for clarity of a description, it is described by assuming that a relatively low DRU index includes a relatively low tone/subcarrier, but the scope of the present disclosure is not limited thereto, and a DRU index may be assigned in various ways to distinguish different DRUs.

In this regard, in the embodiments described below, a method of configuring a larger DRU by using a DRU of one-step smaller size in each bandwidth may be applied.

Examples in which a larger DRU is configured by using combinations of smaller DRUs in each bandwidth may correspond to Tables 4 to 7.

In this regard, it is assumed that, in each bandwidth, DRUs having the same size and the same number as those in the existing RRU tone plan are defined (except that 242-tone DRUs / 484-tone DRUs / 996-tone DRUs / 2×996-tone DRUs in 20 MHz / 40 MHz / 80 MHz / 160 MHz, respectively, are excluded). In addition, it is further assumed that the same number and the same positions of guard/null/DC subcarriers as those in the existing RRU tone plan are used. In particular, for the indices of 26-tone DRUs, it is assumed that available subcarriers are sequentially allocated to each 26-tone DRU in order, starting from the 26-tone DRU having the lowest index, such that available subcarriers located in relatively lower-frequency regions are allocated first. That is, the index of a DRU may indicate whether the lowest-frequency subcarrier of the DRU is at a relatively higher or lower frequency and may also be defined using other index naming schemes. Therefore, in order to maximally distribute tones, a larger DRU may be configured by combining smaller DRUs that are located apart from each other.

For example, for a 20 MHz bandwidth, nine 26-tone DRUs (e.g., 26-tone DRU-1 to 26-tone DRU-9 based on the lower-frequency region) may exist, and based on this, a 52-tone DRU and a 106-tone DRU may be configured as shown in Table 4.

**[Table 4]**

| | DRU Combination |
|---|---|
| 52-tone DRU-1 | 26-tone DRU-1 + 26-tone DRU-6 |
| 52-tone DRU-2 | 26-tone DRU-2 + 26-tone DRU-7 |
| 52-tone DRU-3 | 26-tone DRU-3 + 26-tone DRU-8 |
| 52-tone DRU-4 | 26-tone DRU-4 + 26-tone DRU-9 |
| 106-tone DRU-1 | 52-tone DRU-1 + 52-tone DRU-3 + two null tones |
| 106-tone DRU-2 | 52-tone DRU-2 + 52-tone DRU-4 + two null tones |

For example, for a 40 MHz bandwidth, eighteen 26-tone DRUs (e.g., 26-tone DRU-1 to 26-tone DRU-18 based on the lower-frequency region) may exist, and based on this, a 52-tone DRU, a 106-tone DRU, and a 242-tone DRU may be configured as shown in Table 5.

**[Table 5]**

| | DRU Combination |
|---|---|
| 52-tone DRU-1 | 26-tone DRU-1 + 26-tone DRU-10 |
| 52-tone DRU-2 | 26-tone DRU-2 + 26-tone DRU-11 |
| 52-tone DRU-3 | 26-tone DRU-3 + 26-tone DRU-12 |
| 52-tone DRU-4 | 26-tone DRU-4 + 26-tone DRU-13 |
| 52-tone DRU-5 | 26-tone DRU-6 + 26-tone DRU-15 |
| 52-tone DRU-6 | 26-tone DRU-7 + 26-tone DRU-16 |
| 52-tone DRU-7 | 26-tone DRU-8 + 26-tone DRU-17 |
| 52-tone DRU-8 | 26-tone DRU-9 + 26-tone DRU-18 |
| 106-tone DRU-1 | 52-tone DRU-1 + 52-tone DRU-5 + two null tones |
| 106-tone DRU-2 | 52-tone DRU-2 + 52-tone DRU-6 + two null tones |
| 106-tone DRU-3 | 52-tone DRU-3 + 52-tone DRU-7 + two null tones |
| 106-tone DRU-4 | 52-tone DRU-4 + 52-tone DRU-8 + two null tones |
| 242-tone DRU-1 | 106-tone DRU-1 + 106-tone DRU-3 + 26-tone DRU-5 + four null tones |
| 242-tone DRU-2 | 242-tone DRU-2 = 106-tone DRU-2 + 106-tone DRU-4 + 26-tone DRU-14 + four null tones |

For example, for an 80 MHz bandwidth, thirty-six 26-tone DRUs (e.g., 26-tone DRU-1 to 26-tone DRU-36 based on the lower-frequency region) may exist, and based on this, a 52-tone DRU, a 106-tone DRU, a 242-tone DRU, and a 484-tone DRU may be configured as shown in Table 6.

**[Table 6]**

| | DRU Combination |
|---|---|
| 52-tone DRU-1 | 26-tone DRU-1 + 26-tone DRU-19 |
| 52-tone DRU-2 | 26-tone DRU-2 + 26-tone DRU-20 |
| 52-tone DRU-3 | 26-tone DRU-3 + 26-tone DRU-21 |
| 52-tone DRU-4 | 26-tone DRU-4 + 26-tone DRU-22 |
| 52-tone DRU-5 | 26-tone DRU-6 + 26-tone DRU-24 |
| 52-tone DRU-6 | 26-tone DRU-7 + 26-tone DRU-25 |
| 52-tone DRU-7 | 26-tone DRU-8 + 26-tone DRU-26 |
| 52-tone DRU-8 | 26-tone DRU-9 + 26-tone DRU-27 |
| 52-tone DRU-9 | 26-tone DRU-10 + 26-tone DRU-28 |
| 52-tone DRU-10 | 26-tone DRU-11 + 26-tone DRU-29 |
| 52-tone DRU-11 | 26-tone DRU-12 + 26-tone DRU-30 |
| 52-tone DRU-12 | 26-tone DRU-13 + 26-tone DRU-31 |
| 52-tone DRU-13 | 26-tone DRU-15 + 26-tone DRU-33 |
| 52-tone DRU-14 | 26-tone DRU-16 + 26-tone DRU-34 |
| 52-tone DRU-15 | 26-tone DRU-17 + 26-tone DRU-35 |
| 52-tone DRU-16 | 26-tone DRU-18 + 26-tone DRU-36 |
| 106-tone DRU-1 | 52-tone DRU-1 + 52-tone DRU-9 + two null tones |
| 106-tone DRU-2 | 52-tone DRU-2 + 52-tone DRU-10 + two null tones |
| 106-tone DRU-3 | 52-tone DRU-3 + 52-tone DRU-11 + two null tones |
| 106-tone DRU-4 | 52-tone DRU-4 + 52-tone DRU-12 + two null tones |
| 106-tone DRU-5 | 52-tone DRU-5 + 52-tone DRU-13 + two null tones |
| 106-tone DRU-6 | 52-tone DRU-6 + 52-tone DRU-14 + two null tones |
| 106-tone DRU-7 | 52-tone DRU-7 + 52-tone DRU-15 + two null tones |
| 106-tone DRU-8 | 52-tone DRU-8 + 52-tone DRU-16 + two null tones |
| 242-tone DRU-1 | 106-tone DRU-1 + 106-tone DRU-5 + 26-tone DRU-5 + four null tones |
| 242-tone DRU-2 | 106-tone DRU-2 + 106-tone DRU-6 + 26-tone DRU-14 + four null tones |
| 242-tone DRU-3 | 106-tone DRU-1 + 106-tone DRU-5 + 26-tone DRU-5 + four null tones |
| 242-tone DRU-4 | 106-tone DRU-2 + 106-tone DRU-6 + 26-tone DRU-14 + four null tones |
| 484-tone DRU-1 | 242-tone DRU-1 + 242-tone DRU-3 |
| 484-tone DRU-2 | 242-tone DRU-2 + 242-tone DRU-4 |

For example, for a 160 MHz bandwidth, seventy-two 26-tone DRUs (e.g., 26-tone DRU-1 to 26-tone DRU-72 based on the lower-frequency region) may exist, and based on this, a 52-tone DRU, a 106-tone DRU, a 242-tone DRU, a 484-tone DRU, and a 996-tone DRU may be configured as shown in Table 7.

**[Table 7]**

| | DRU Combination |
|---|---|
| 52-tone DRU-1 | 26-tone DRU-1 + 26-tone DRU-37 |
| 52-tone DRU-2 | 26-tone DRU-2 + 26-tone DRU-38 |
| 52-tone DRU-3 | 26-tone DRU-3 + 26-tone DRU-39 |
| 52-tone DRU-4 | 26-tone DRU-4 + 26-tone DRU-40 |
| 52-tone DRU-5 | 26-tone DRU-6 + 26-tone DRU-42 |
| 52-tone DRU-6 | 26-tone DRU-7 + 26-tone DRU-43 |
| 52-tone DRU-7 | 26-tone DRU-8 + 26-tone DRU-44 |
| 52-tone DRU-8 | 26-tone DRU-9 + 26-tone DRU-45 |
| 52-tone DRU-9 | 26-tone DRU-10 + 26-tone DRU-46 |
| 52-tone DRU-10 | 26-tone DRU-11 + 26-tone DRU-47 |
| 52-tone DRU-11 | 26-tone DRU-12 + 26-tone DRU-48 |
| 52-tone DRU-12 | 26-tone DRU-13 + 26-tone DRU-49 |
| 52-tone DRU-13 | 26-tone DRU-15 + 26-tone DRU-51 |
| 52-tone DRU-14 | 26-tone DRU-16 + 26-tone DRU-52 |
| 52-tone DRU-15 | 26-tone DRU-17 + 26-tone DRU-53 |
| 52-tone DRU-16 | 26-tone DRU-18 + 26-tone DRU-54 |
| 52-tone DRU-17 | 26-tone DRU-19 + 26-tone DRU-55 |
| 52-tone DRU-18 | 26-tone DRU-20 + 26-tone DRU-56 |
| 52-tone DRU-19 | 26-tone DRU-21 + 26-tone DRU-57 |
| 52-tone DRU-20 | 26-tone DRU-22 + 26-tone DRU-58 |
| 52-tone DRU-21 | 26-tone DRU-24 + 26-tone DRU-60 |
| 52-tone DRU-22 | 26-tone DRU-25 + 26-tone DRU-61 |
| 52-tone DRU-23 | 26-tone DRU-26 + 26-tone DRU-62 |
| 52-tone DRU-24 | 26-tone DRU-27 + 26-tone DRU-63 |
| 52-tone DRU-25 | 26-tone DRU-28 + 26-tone DRU-64 |
| 52-tone DRU-26 | 26-tone DRU-29 + 26-tone DRU-65 |
| 52-tone DRU-27 | 26-tone DRU-30 + 26-tone DRU-66 |
| 52-tone DRU-28 | 26-tone DRU-31 + 26-tone DRU-67 |
| 52-tone DRU-29 | 26-tone DRU-33 + 26-tone DRU-69 |
| 52-tone DRU-30 | 26-tone DRU-34 + 26-tone DRU-70 |
| 52-tone DRU-31 | 26-tone DRU-35 + 26-tone DRU-71 |
| 52-tone DRU-32 | 26-tone DRU-36 + 26-tone DRU-72 |
| 106-tone DRU-1 | 52-tone DRU-1 + 52-tone DRU-17 + two null tones |
| 106-tone DRU-2 | 52-tone DRU-2 + 52-tone DRU-18 + two null tones |
| 106-tone DRU-3 | 52-tone DRU-3 + 52-tone DRU-19 + two null tones |
| 106-tone DRU-4 | 52-tone DRU-4 + 52-tone DRU-20 + two null tones |
| 106-tone DRU-5 | 52-tone DRU-5 + 52-tone DRU-21 + two null tones |
| 106-tone DRU-6 | 52-tone DRU-6 + 52-tone DRU-22 + two null tones |
| 106-tone DRU-7 | 52-tone DRU-7 + 52-tone DRU-23 + two null tones |
| 106-tone DRU-8 | 52-tone DRU-8 + 52-tone DRU-24 + two null tones |
| 106-tone DRU-9 | 52-tone DRU-9 + 52-tone DRU-25 + two null tones |
| 106-tone DRU-10 | 52-tone DRU-10 + 52-tone DRU-26 + two null tones |
| 106-tone DRU-11 | 52-tone DRU-11 + 52-tone DRU-27 + two null tones |
| 106-tone DRU-12 | 52-tone DRU-12 + 52-tone DRU-28 + two null tones |
| 106-tone DRU-13 | 52-tone DRU-13 + 52-tone DRU-29 + two null tones |
| 106-tone DRU-14 | 52-tone DRU-14 + 52-tone DRU-30 + two null tones |
| 106-tone DRU-15 | 52-tone DRU-15 + 52-tone DRU-31 + two null tones |
| 106-tone DRU-16 | 52-tone DRU-16 + 52-tone DRU-32 + two null tones |
| 242-tone DRU-1 | 106-tone DRU-1 + 106-tone DRU-9 + 26-tone DRU-5 + four null tones |
| 242-tone DRU-2 | 106-tone DRU-2 + 106-tone DRU-10 + 26-tone DRU-14 + four null tones |
| 242-tone DRU-3 | 106-tone DRU-3 + 106-tone DRU-11 + 26-tone DRU-23 + four null tones |
| 242-tone DRU-4 | 106-tone DRU-4 + 106-tone DRU-12 + 26-tone DRU-32 + four null tones |
| 242-tone DRU-5 | 106-tone DRU-5 + 106-tone DRU-13 + 26-tone DRU-41 + four null tones |
| 242-tone DRU-6 | 106-tone DRU-6 + 106-tone DRU-14 + 26-tone DRU-50 + four null tones |
| 242-tone DRU-7 | 106-tone DRU-7 + 106-tone DRU-15 + 26-tone DRU-59 + four null tones |
| 242-tone DRU-8 | 106-tone DRU-8 + 106-tone DRU-16 + 26-tone DRU-68 + four null tones |
| 484-tone DRU-1 | 242-tone DRU-1 + 242-tone DRU-5 |
| 484-tone DRU-2 | 242-tone DRU-2 + 242-tone DRU-6 |
| 484-tone DRU-3 | 242-tone DRU-3 + 242-tone DRU-7 |
| 484-tone DRU-4 | 242-tone DRU-4 + 242-tone DRU-8 |
| 996-tone DRU-1 | 484-tone DRU-1 + 484-tone DRU-3 + two null tones |
| 996-tone DRU-2 | 484-tone DRU-2 + 484-tone DRU-4 + two null tones |

Additionally, in the following description, it is assumed that the index of a subcarrier is defined with the index of the DC subcarrier being zero, that the index corresponds to the position in the frequency domain, and that the term "subcarrier" may be replaced with the term "tone."

### Embodiment 1

The present embodiment relates to a scheme for designing/defining new pilot tones for DRUs of various sizes.

In this regard, in each bandwidth (e.g., bandwidths of 20 MHz / 40 MHz / 80 MHz / 160 MHz), data tones and pilot tones allocated to each DRU may be allocated in a distributed manner among available subcarriers, and a tone at a specific position may be defined as a pilot tone.

New pilot tones may be defined based on one or more of the methods described below.

### (Method 1-1)

For each DRU, a tone at a position corresponding to the pilot positions of an RRU having the same size may be used/defined as a pilot tone.

Specifically, pilot tones in a DRU may be defined according to the size of the DRU as follows.
- 26-tone DRU: for the 26 available subcarriers/tones constituting the corresponding DRU, [6th tone and 20th tone], [7th tone and 21st tone], or [7th tone and 20th tone] (i.e., two pilot tones).
- 52-tone DRU: for the 52 available subcarriers/tones constituting the corresponding DRU, [6th tone, 20th tone, 32nd tone, and 46th tone] or [7th tone, 21st tone, 33rd tone, and 47th tone] (i.e., four pilot tones).
- 106-tone DRU: for the 106 available subcarriers/tones constituting the corresponding DRU, [7th tone, 33rd tone, 75th tone, and 101st tone] or [6th tone, 32nd tone, 74th tone, and 100th tone] (i.e., four pilot tones).
- 242-tone DRU: for the 242 available subcarriers/tones constituting the corresponding DRU, [7th tone, 33rd tone, 75th tone, 101st tone, 141st tone, 167th tone, 209th tone, and 235th tone] or [8th tone, 34th tone, 76th tone, 102nd tone, 142nd tone, 168th tone, 210th tone, and 236th tone] (i.e., eight pilot tones).
- 484-tone DRU: for the 484 available subcarriers/tones constituting the corresponding DRU, [7th tone, 33rd tone, 75th tone, 101st tone, 141st tone, 167th tone, 209th tone, 235th tone, 250th tone, 276th tone, 318th tone, 344th tone, 384th tone, 410th tone, 452nd tone, and 478th tone] (i.e., sixteen pilot tones).

996-tone DRU: for the 996 available subcarriers/tones constituting the corresponding DRU, [33rd tone, 101st tone, 167th tone, 235th tone, 281st tone, 349th tone, 415th tone, 483rd tone, 514th tone, 582nd tone, 648th tone, 716th tone, 762nd tone, 830th tone, 896th tone, and 964th tone] (i.e., sixteen pilot tones).

In this method, the order of tones described may refer to the order based on the lowest-frequency tone within each DRU, and the tones located at the corresponding positions may be used as pilot tones in each DRU.

This method may have relatively high complexity from an implementation perspective but may be desirable from a performance perspective.

### (Method 1-2)

For a 26-tone DRU, Method 1-1 is applied, and for DRUs having sizes greater than this, that is, from a 52-tone DRU onward, pilot tones of the corresponding DRU may be defined based on the pilot tones of the one-step smaller DRU that constitutes the DRU.

Additionally or alternatively, Method 1-1 may be applied up to a DRU of a certain size, and for DRUs having sizes greater than that, pilot tones of the corresponding DRU may be defined based on the pilot tones of the one-step smaller DRU that constitutes the DRU.

In this method, when a specific DRU uses pilot tones of the smaller DRU(s) that constitute it, the pilot tones may not be distributed and may be concentrated at specific positions. Therefore, this method may be inefficient from a performance perspective but may be advantageous from an implementation perspective.

### (Method 1-3)

In order to ensure both implementation feasibility of Method 1-2 and performance characteristics, for each bandwidth, new pilot tones for a 26-tone DRU may be defined by shifting pilot tones at specific positions within the 26-tone DRU, and for DRUs having sizes greater than 26 tones, that is, for DRUs having sizes greater than or equal to 52 tones, pilot tones of the corresponding DRU may be defined based on the pilot tones of the next smaller DRU that constitutes the DRU.

Here, the pilot tones at specific positions within the 26-tone DRU may correspond to the pilot tones defined based on the aforementioned Method 1-1.

This method may be based on the method described in the present disclosure in which a DRU of larger size is configured by using a one-step smaller DRU (e.g., the DRU combination schemes shown in Tables 4 to 7).

Hereinafter, for each bandwidth, a specific method will be described in which pilot tones for a 26-tone DRU are defined based on the aforementioned pilot-tone shifting scheme, and pilot tones for DRUs of other sizes are defined based on the pilot tones of the 26-tone DRU.

First, a method of shifting pilot tones in a 160 MHz bandwidth will be described in detail.

A 996-tone DRU may be formed by a combination of two 484-tone DRUs (and a combination of null tones). In this case, among thirty-two pilot tones based on the two 484-tone DRUs (i.e., sixteen pilot tones of each 484-tone DRU), sixteen pilot tones may be converted into data tones in the 996-tone DRU, and the remaining sixteen pilot tones may be used as pilot tones in the 996-tone DRU.

In this regard, the sixteen pilot tones may correspond to pilot tones of eight specific 26-tone DRUs, and the use of pilot tones at similar positions between two 996-tone DRUs may not cause performance degradation. Accordingly, in a 160 MHz bandwidth, it may be necessary to set pilot-tone positions for eight 26-tone DRUs.

The pilot-tone positions for the eight 26-tone DRUs may be set in various manners. In addition, as illustrated in the following example, a corresponding pilot-tone shift value may be defined/set for the pilot tones of each 26-tone DRU, and the pilot-tone positions may be set by applying the corresponding values.

For pilot-tone shift values [p₁, p₂, p₃, p₄, p₅, p₆, p₇, p₈] to be applied to the eight 26-tone DRUs,
Example 1. [-4, -3, -2, -1, +1, +2, +3, +4]
Example 2. [-5, -3, -2, -1, +1, +2, +3, +5]
Example 3. [-5, -4, -2, -1, +1, +2, +4, +5]
Example 4. [-5, -4, -3, -1, +1, +3, +4, +5]
Example 5. [-5, -4, -3, -2, +2, +3, +4, +5]
Example 6. [-6, -3, -2, -1, +1, +2, +3, +6]
Example 7. [-6, -4, -2, -1, +1, +2, +4, +6]
Example 8. [-6, -5, -2, -1, +1, +2, +5, +6]
Example 9. [-6, -4, -3, -1, +1, +3, +4, +6]
Example 10. [-6, -5, -3, -1, +1, +3, +5, +6]
Example 11. [-6, -5, -4, -1, +1, +4, +5, +6]
Example 12. [-6, -4, -3, -2, +2, +3, +4, +6]
Example 13. [-6, -5, -3, -2, +2, +3, +5, +6]
Example 14. [-6, -5, -4, -2, +2, +4, +5, +6]
Example 15. [-6, -5, -4, -3, +3, +4, +5, +6]

The foregoing examples may fundamentally correspond to cases defined based on a shift of (7, 10). Here, the meaning of (a, b) denotes that the pilot tones correspond to the ath and bth tones, respectively, counted from the lowest-frequency tone among the tones constituting the 26-tone DRU. In the foregoing examples, when a pilot-tone shift value of "-c" is applied, it indicates that (7-c, 20-c) become the pilot tones, and when a pilot-tone shift value of "+d" is applied, it may indicate that (7+d, 20+d) become the pilot tones.

Fundamentally, as in the foregoing examples, pilot tones may be configured by applying eight different pilot-tone shift values among values ranging from "-6" to "+6," and various other cases may also be considered. For example, a pilot-tone shift scheme may be defined based on other pilot tones in Method 1-1. In addition, for pilot-tone shift values, in the case of (6, 20), only a range of values from "-5" to "+6" may be considered, and in the case of (7, 21), only a range of values from "-6" to "+5" may be considered.

For the eight 26-tone DRUs, pilot tones within each 26-tone DRU may be mapped to the pilot-tone shift values, and such mapping may be determined/performed in consideration of the combination of smaller DRUs constituting a larger DRU. That is, in consideration of the combination of smaller DRUs that constitute a larger DRU, a specific value (i.e., a specific pilot-tone shift value) may be mapped to each DRU.

As described above, the eight pilot-tone shift values to be applied to the eight 26-tone DRUs may be referred to as [p₁, p₂, p₃, p₄, p₅, p₆, p₇, p₈]. As one example, each pilot-tone shift value may be set to any value within the range from "-6" to "+6" (or, depending on the pilot tones used in Method 1-1, "-5" may be used instead of "-6" and/or "+5" may be used instead of "+6"), satisfying p₁ < p₂ < p₃ < p₄ < p₅ < p₆ < p₇ < p₈.

In this regard, it may be desirable (from an implementation perspective) that pilot tones of 26-tone DRUs that are not used in forming a 52-tone DRU but are used in forming a 242-tone DRU not be used as pilot tones of the 242-tone DRU. Therefore, for such 26-tone DRUs (e.g., 26-tone DRU-5, 26-tone DRU-14, 26-tone DRU-23, 26-tone DRU-32, 26-tone DRU-41, 26-tone DRU-50, 26-tone DRU-59, and 26-tone DRU-68), any shift may be applied to the pilot tones; however, it may be desirable (from an implementation perspective) to use one of the pilot-tone positions of Method 1-1 (e.g., (7, 20)).

Regarding the mapping of pilot tones of each 26-tone DRU to the foregoing shift values, the pilot-tone shift values applied to the two 26-tone DRUs that constitute a 52-tone DRU may differ, and in order to maximize distribution, shift values that are far apart may need to be used. For example, when a pilot-tone shift value applied to one 26-tone DRU constituting a 52-tone DRU is pₐ, and the pilot-tone shift value applied to the other 26-tone DRU is p_{a+b}, the value of b may be 4, and a cyclic shift may be applied. As a specific example, for the 26-tone DRUs constituting each 52-tone DRU, p₁ and p₅, p₂ and p₆, p₃ and p₇, and p₄ and ps may be used.

Among the pilot tones of the two 52-tone DRUs that constitute a 106-tone DRU, four tones may be converted into data tones, and the remaining four tones may be used as pilot tones. Accordingly, for the 26-tone DRUs constituting each 52-tone DRU, the pilot-tone shift values may be applied identically. For example, when the pilot-tone shift values for the two 26-tone DRUs within one 52-tone DRU are p₁ and p₅, the pilot-tone shift values for the two 26-tone DRUs within the other 52-tone DRU may also be p₁ and p₅. Thus, for the pilot tones of the 106-tone DRU, the pilot tones of one of the two 52-tone DRUs may be used. Alternatively, one 26-tone DRU may be selected from each 52-tone DRU such that the selected two 26-tone DRUs have different pilot-tone shift values, and the pilot tones of the two selected 26-tone DRUs may be used as the pilot tones of the 106-tone DRU. That is, similar to the 52-tone DRU, in the case of the 106-tone DRU, the pilot-tone shift values for the two 26-tone DRUs constituting the pilot tones may be p₁ and p₅, p₂ and p₆, p₃ and p₇, or p₄ and p₈.

The pilot tones of a 242-tone DRU may be used directly from the pilot tones of the two 106-tone DRUs that constitute it. In this case, in order to achieve distributed pilot tones, for the four 26-tone DRUs that constitute the 242-tone DRU, odd-indexed pilot-tone shift values (i.e., p₁, p₃, p₅, p₇) may be used. That is, in order to enable such a configuration, the pilot-tone shift values for the two 26-tone DRUs constituting the pilot tones of each of the two combined 106-tone DRUs may be p₁ and p₅, and p₃ and p₇. Alternatively, in order to achieve distributed pilot tones, for the four 26-tone DRUs that constitute the 242-tone DRU, even-indexed pilot-tone shift values (i.e., p₂, p₄, p₆, p₈) may be used. That is, in order to enable such a configuration, the pilot-tone shift values for the two 26-tone DRUs constituting the pilot tones of each of the two combined 106-tone DRUs may be p₂ and p₆, and p₄ and p₈.

Additionally or alternatively, for a 484-tone DRU, the pilot tones of the two 242-tone DRUs that constitute it may be used directly. In this case, in order to achieve distributed pilot tones, the pilot-tone shift values of the eight 26-tone DRUs that constitute the 484-tone DRU may be p₁, p₂, p₃, p₄, p₅, p₆, p₇, and p₈. In this regard, in order to enable such a configuration, the pilot-tone shift values for the four 26-tone DRUs constituting the pilot tones of each of the two combined 242-tone DRUs may correspond, respectively, to the even-indexed values (i.e., p₂, p₄, p₆, p₈) and the odd-indexed values (i.e., p₁, p₃, p₅, p₇).

For a 996-tone DRU, among the pilot tones of the two 484-tone DRUs that constitute it, sixteen tones may be converted into data tones, and the remaining sixteen tones may be used as pilot tones. Similar to the case of the 106-tone DRU, the pilot-tone shift values may be applied identically for the 26-tone DRUs constituting the pilot tones of each 484-tone DRU. Additionally, as described above, the pilot-tone shift values for the eight 26-tone DRUs constituting the pilot tones of a 484-tone DRU may be p₁, p₂, p₃, p₄, p₅, p₆, p₇, and ps, respectively. Therefore, for the pilot tones of the 996-tone DRU, the pilot tones of one of the two 484-tone DRUs may be used. Alternatively, one 26-tone DRU may be selected from among the pilot tones of the 26-tone DRUs that have identical pilot-tone shift values in each 484-tone DRU, and by performing such selection identically for all shift values, the finally selected pilot tones may be used as the pilot tones of the 996-tone DRU.

Based on the foregoing method, for a 160 MHz bandwidth, the 26-tone DRUs that use each pilot-tone shift value may be defined, as one example, as follows.
26-tone DRUs using p₁: 26-tone DRU-1, 26-tone DRU-2, 26-tone DRU-3, 26-tone DRU-4, 26-tone DRU-19, 26-tone DRU-20, 26-tone DRU-21, and 26-tone DRU-22.
26-tone DRUs using p₂: 26-tone DRU-6, 26-tone DRU-7, 26-tone DRU-8, 26-tone DRU-9, 26-tone DRU-24, 26-tone DRU-25, 26-tone DRU-26, and 26-tone DRU-27.
26-tone DRUs using p₃: 26-tone DRU-10, 26-tone DRU-11, 26-tone DRU-12, 26-tone DRU-13, 26-tone DRU-28, 26-tone DRU-29, 26-tone DRU-30, and 26-tone DRU-31.
26-tone DRUs using p₄: 26-tone DRU-15, 26-tone DRU-16, 26-tone DRU-17, 26-tone DRU-18, 26-tone DRU-33, 26-tone DRU-34, 26-tone DRU-35, and 26-tone DRU-36.
26-tone DRUs using p₅: 26-tone DRU-37, 26-tone DRU-38, 26-tone DRU-39, 26-tone DRU-40, 26-tone DRU-55, 26-tone DRU-56, 26-tone DRU-57, and 26-tone DRU-58.
26-tone DRUs using p₆: 26-tone DRU-42, 26-tone DRU-43, 26-tone DRU-44, 26-tone DRU-45, 26-tone DRU-60, 26-tone DRU-61, 26-tone DRU-62, and 26-tone DRU-63.
26-tone DRUs using p₇: 26-tone DRU-46, 26-tone DRU-47, 26-tone DRU-48, 26-tone DRU-49, 26-tone DRU-64, 26-tone DRU-65, 26-tone DRU-66, and 26-tone DRU-67.
26-tone DRUs using p₈: 26-tone DRU-51, 26-tone DRU-52, 26-tone DRU-53, 26-tone DRU-54, 26-tone DRU-69, 26-tone DRU-70, 26-tone DRU-71, and 26-tone DRU-72.

In each of the foregoing pilot-tone shift values, for the 26-tone DRUs located in the same order for p₁ and p₅, the pilot-tone shift values may be interchanged. For example, the pilot-tone shift values of 26-tone DRU-1 and 26-tone DRU-37 may be interchanged. That is, p₅ may be used in 26-tone DRU-1, and p₁ may be used in 26-tone DRU-37. As another example, the pilot-tone shift values of 26-tone DRU-2 and 26-tone DRU-38 may be interchanged. That is, p₅ may be used in 26-tone DRU-2, and p₁ may be used in 26-tone DRU-38. Similarly, for the 26-tone DRUs located in the same order for p₂ and p₆, the pilot-tone shift values may be interchanged. Similarly, for the 26-tone DRUs located in the same order for p₃ and p₇, the pilot-tone shift values may be interchanged. Similarly, for the 26-tone DRUs located in the same order for p₄ and p₈, the pilot-tone shift values may be interchanged.

Regarding the configuration of a 996-tone DRU, in each pilot-tone shift value, the odd-indexed 26-tone DRUs (e.g., for p₁: 26-tone DRU-1, 26-tone DRU-3, 26-tone DRU-19, and 26-tone DRU-21; for p₂: 26-tone DRU-6, 26-tone DRU-8, 26-tone DRU-24, and 26-tone DRU-26) may be configured to constitute 996-tone DRU-1. In addition, the even-indexed 26-tone DRUs (e.g., for p₁: 26-tone DRU-2, 26-tone DRU-4, 26-tone DRU-20, and 26-tone DRU-22; for p₂: 26-tone DRU-7, 26-tone DRU-9, 26-tone DRU-25, and 26-tone DRU-27) may be configured to constitute 996-tone DRU-2. That is, each 996-tone DRU is constituted by four 26-tone DRUs having identical pilot-tone shift values, and during the process of configuring a 106-tone DRU, pilot tones corresponding to two of the four identical pilot-tone shift values are converted into data tones, and during the process of configuring a 996-tone DRU, among the remaining two identical pilot-tone shift values, one pilot tone corresponding to one of the values may be converted into a data tone. Through this, ultimately, for each 996-tone DRU, only the pilot tone of one 26-tone DRU corresponding to each pilot-tone shift value may be used as the pilot tone.

Next, a method of shifting pilot tones in an 80 MHz bandwidth will be described in detail.

A 484-tone DRU may be formed by a combination of two 242-tone DRUs. In this case, sixteen pilot tones based on the two 242-tone DRUs (i.e., eight pilot tones of each 242-tone DRU) may constitute the pilot tones. In this regard, the sixteen pilot tones may correspond to the pilot tones of eight specific 26-tone DRUs, and the use of pilot tones at similar positions between two 484-tone DRUs may not cause performance degradation. Accordingly, for an 80 MHz bandwidth, it may be necessary, in a representative manner, to establish the pilot-tone positions for eight 26-tone DRUs. The eight pilot-tone shift values may be set in the same manner as described above for the 160 MHz bandwidth.

For the eight 26-tone DRUs, the pilot tones within each 26-tone DRU may be mapped according to the pilot-tone shift values, and such mapping may be determined and performed in consideration of the combination of smaller DRUs that constitute a larger DRU. That is, in consideration of the combination of smaller DRUs constituting a larger DRU, a specific value (i.e., a specific pilot-tone shift value) may be mapped to each DRU.

As described above, the eight pilot-tone shift values to be applied to the eight 26-tone DRUs may be referred to as [p₁, p₂, p₃, p₄, p₅, p₆, p₇, p₈]. As one example, each pilot-tone shift value may be set to any value within the range from "-6" to "+6" (or, depending on the pilot tones used in Method 1-1, "-5" may be used instead of "-6" and/or "+5" may be used instead of "+6"), satisfying p₁ < p₂ < p₃ < p₄ < p₅ < p₆ < p₇ < p₈.

In this regard, it may be desirable (from an implementation perspective) that the pilot tones of the 26-tone DRUs that are not used in forming a 52-tone DRU but are used in forming a 242-tone DRU not be used as pilot tones of the 242-tone DRU. Therefore, for such 26-tone DRUs (e.g., 26-tone DRU-5, 26-tone DRU-14, 26-tone DRU-23, and 26-tone DRU-32), any shift may be applied to the pilot tones; however, it may be desirable (from an implementation perspective) to use one of the pilot-tone positions of Method 1-1 (e.g., (7, 20)).

The method of mapping the pilot tones of each 26-tone DRU to the foregoing pilot-tone shift values is identical to that of the 160 MHz bandwidth (see the description up to the 484-tone DRU), and therefore detailed description is omitted.

Based on the foregoing method, for an 80 MHz bandwidth, the 26-tone DRUs that use each pilot-tone shift value may be defined, as one example, as follows.
26-tone DRUs using p₁: 26-tone DRU-1, 26-tone DRU-2, 26-tone DRU-10, and 26-tone DRU-11.
26-tone DRUs using p₂: 26-tone DRU-3, 26-tone DRU-4, 26-tone DRU-12, and 26-tone DRU-13.
26-tone DRUs using p₃: 26-tone DRU-6, 26-tone DRU-7, 26-tone DRU-15, and 26-tone DRU-16.
26-tone DRUs using p₄: 26-tone DRU-8, 26-tone DRU-9, 26-tone DRU-17, and 26-tone DRU-18.
26-tone DRUs using p₅: 26-tone DRU-19, 26-tone DRU-20, 26-tone DRU-28, and 26-tone DRU-29.
26-tone DRUs using p₆: 26-tone DRU-21, 26-tone DRU-22, 26-tone DRU-30, and 26-tone DRU-31.
26-tone DRUs using p₇: 26-tone DRU-24, 26-tone DRU-25, 26-tone DRU-33, and 26-tone DRU-34.
26-tone DRUs using p₈: 26-tone DRU-26, 26-tone DRU-27, 26-tone DRU-35, and 26-tone DRU-36.

In each of the foregoing pilot-tone shift values, for the 26-tone DRUs located in the same order for p₁ and p₅, the pilot-tone shift values may be interchanged. For example, the pilot-tone shift values of 26-tone DRU-1 and 26-tone DRU-19 may be interchanged. That is, p₅ may be used in 26-tone DRU-1, and p₁ may be used in 26-tone DRU-19. As another example, the pilot-tone shift values of 26-tone DRU-2 and 26-tone DRU-20 may be interchanged. That is, p₅ may be used in 26-tone DRU-2, and p₁ may be used in 26-tone DRU-20. Similarly, for the 26-tone DRUs located in the same order for p₂ and p₆, the pilot-tone shift values may be interchanged. Similarly, for the 26-tone DRUs located in the same order for p3 and p7, the pilot-tone shift values may be interchanged. Similarly, for the 26-tone DRUs located in the same order for p₄ and p₈, the pilot-tone shift values may be interchanged.

Regarding the configuration of a 484-tone DRU, in each pilot-tone shift value, the odd-indexed 26-tone DRUs (e.g., for p₁: 26-tone DRU-1 and 26-tone DRU-10; for p₂: 26-tone DRU-3 and 26-tone DRU-12) may be configured to constitute 484-tone DRU-1. In addition, the even-indexed 26-tone DRUs (e.g., for p₁: 26-tone DRU-2 and 26-tone DRU-11; for p₂: 26-tone DRU-4 and 26-tone DRU-13) may be configured to constitute 484-tone DRU-2. That is, each 484-tone DRU is constituted by two 26-tone DRUs having identical pilot-tone shift values, and during the process of configuring a 106-tone DRU, one of the pilot tones corresponding to the two identical pilot-tone shift values may be converted into a data tone. Through this, ultimately, for each 484-tone DRU, only the pilot tone of one 26-tone DRU corresponding to each pilot-tone shift value may be used as the pilot tone of the 484-tone DRU.

Next, a method of shifting pilot tones in a 40 MHz bandwidth will be described in detail.

A 242-tone DRU may be formed by a combination of two 106-tone DRUs (and a combination of one 26-tone DRU and null tones). In this case, it may be constituted by eight pilot tones based on the two 106-tone DRUs (i.e., four pilot tones of each 106-tone DRU). In this regard, the pilot tones of the 26-tone DRUs used for forming the 106-tone DRU may be converted into data tones.

In this regard, the eight pilot tones may correspond to the pilot tones of four specific 26-tone DRUs, and even if the pilot tones at similar positions are used between the two 242-tone DRUs, there may be no performance issue. Accordingly, representatively, in a 40 MHz bandwidth, it may be necessary to set the pilot-tone positions of four 26-tone DRUs.

The positions of the pilot tones of the four 26-tone DRUs may be set in various manners, and as in the following example, a method of applying a shift to the pilot tones of each 26-tone DRU may be considered. This method is basically defined based on the shift of (7, 20), and the pilot tones may be configured by applying four different pilot tone shift values among the values ranging from '-6' to '+6', and various cases other than these examples may also be considered. For example, based on other pilot tones of Method 1-1, a pilot tone shift method may be defined by applying a different range.
Example 1. [-6, -(6-a), +(6-a), +6], (where a = 1 or 2 or 3 or 4 or 5)
Example 2. [-5, -(5-a), +(5-a), +5], (where a = 1 or 2 or 3 or 4)
Example 3. [-4, -(4-a), +(4-a), +4], (where a = 1 or 2 or 3)
Example 4. [-3, -(3-a), +(3-a), +3], (where a = 1 or 2)
Example 5. [-2, -1, +1, +2]
Example 6. [-6, -(6-a), -(6-2a), -(6-3a)], (where a = 1 or 2 or 3 or 4)
Example 7. [-5, -(5-a), -(5-2a), -(5-3a)], (where a = 1 or 2 or 3)
Example 8. [-4, -(4-a), -(4-2a), -(4-3a)], (where a = 1 or 2 or 3)
Example 9. [-3, -(3-a), -(3-2a), -(3-3a)], (where a = 1 or 2 or 3)
Example 10. [-2, -(2-a), -(2-2a), -(2-3a)], (where a = 1 or 2)
Example 11. [-1, -(1-a), -(1-2a), -(1-3a)], (where a = 1 or 2)
Example 12. [0, +a, +2a, +3a], (where a = 1 or 2)
Example 13. [+1, +2, +3, +4]
Example 14. [+2, +3, +4, +5]
Example 15. [+3, +4, +5, +6]

With respect to the four 26-tone DRUs, the pilot tones within each 26-tone DRU may be mapped according to the pilot-tone shift values, and such mapping may be determined and performed in consideration of the combination of smaller DRUs that constitute a larger DRU. That is, in consideration of the combination of smaller DRUs constituting a larger DRU, a specific value (i.e., a specific pilot-tone shift value) may be mapped for each DRU.

As described above, four pilot-tone shift values to be applied to four 26-tone DRUs may be referred to as [p₁, p₂, p₃, p₄]. For example, each pilot tone shift value may be set to any value within a range from -6 to +6 (or, depending on the pilot tones of Method 1-1 being used, -5 may be used instead of -6 and/or +5 may be used instead of +6), such that p₁ < p₂ < p₃ < p₄ is satisfied.

In this regard, it may be desirable, from an implementation perspective, that the pilot tones of the 26-tone DRU(s) that are not used in the formation of a 52-tone DRU but are used in the composition of a 242-tone DRU not be used as pilot tones of the 242-tone DRU. Accordingly, for such 26-tone DRU(s) (e.g., 26-tone DRU-5 and 26-tone DRU-14), any shift may be applied to the pilot tones, but it may be desirable, from an implementation perspective, to use one of the pilot-tone positions of Method 1-1 (e.g., (7, 20)).

With respect to mapping the pilot tones of each 26-tone DRU to the above-described shift values, the pilot tone shift values applied to the two 26-tone DRUs that constitute a 52-tone DRU may differ, and to maximize distribution, it may be necessary to use shift values that are located far apart. For example, if the pilot tone shift value applied to one of the 26-tone DRUs constituting a 52-tone DRU is pₐ and the pilot tone shift value applied to the other 26-tone DRU is p_{a+b}, the value of b may be 2, and a cyclic shift may be applied. As a specific example, for the 26-tone DRUs constituting each 52-tone DRU, p₁ and p₃, and p₂ and p₄ may be used.

Among the pilot tones of the two 52-tone DRUs that constitute the 106-tone DRU, four tones may be converted into data tones, and only the remaining four tones may be used as pilot tones. Therefore, the pilot tone shift values may be applied identically to the 26-tone DRUs that constitute each 52-tone DRU. For example, when the pilot tone shift values for the two 26-tone DRUs in one 52-tone DRU are p₁ and p₃, the pilot tone shift values for the two 26-tone DRUs in the other 52-tone DRU may also be p₁ and p₃. Therefore, as the pilot tones of the 106-tone DRU, the pilot tones of one of the two 52-tone DRUs may be used. Alternatively, in each 52-tone DRU, one 26-tone DRU having a pilot-tone shift value different from the other may be selected, and the pilot tones of the selected two 26-tone DRUs may be used as the pilot tones of the 106-tone DRU. That is, similar to the 52-tone DRU, in the case of the 106-tone DRU, the pilot-tone shift values of the two 26-tone DRUs that constitute the pilot tones may be p₁ and p₃, and p₂ and p₄.

The pilot tones of the 242-tone DRU may be used as they are from the pilot tones of the two 106-tone DRUs that constitute the 242-tone DRU. In this case, for distributed pilot tones, the pilot tone shift values of the four 26-tone DRUs that constitute the 242-tone DRU may need to be composed of p₁, p₂, p₃, and p₄. That is, to enable such configuration, the pilot tone shift values of the two 26-tone DRUs that constitute the pilot tones of each of the two combined 106-tone DRUs may need to be p₁ and p₃, and p₂ and p₄.

Based on the above-described method, with respect to the 40 MHz bandwidth, the 26-tone DRUs that use each pilot-tone shift value may be defined, by way of one example, as follows.
26-tone DRUs using p₁: 26-tone DRU-1, 26-tone DRU-2, 26-tone DRU-6, 26-tone DRU-7.
26-tone DRUs using p₂: 26-tone DRU-3, 26-tone DRU-4, 26-tone DRU-8, 26-tone DRU-9.
26-tone DRUs using p₃: 26-tone DRU-10, 26-tone DRU-11, 26-tone DRU-15, 26-tone DRU-16.
26-tone DRUs using p₄: 26-tone DRU-12, 26-tone DRU-13, 26-tone DRU-17, 26-tone DRU-18.

In each of the above-described pilot tone shift values, for the 26-tone DRUs located in the same order for p₁ and p₃, the pilot-tone shift values may be interchanged. For example, the pilot tone shift values of 26-tone DRU-1 and 26-tone DRU-10 may be interchanged. That is, p₃ may be used in 26-tone DRU-1, and p₁ may be used in 26-tone DRU-10. As another example, the pilot tone shift values of 26-tone DRU-2 and 26-tone DRU-11 may be interchanged. That is, p₃ may be used in 26-tone DRU-2, and p₁ may be used in 26-tone DRU-11. Similarly, for the 26-tone DRUs located in the same order for p₂ and p₄, the pilot tone shift values may be interchanged.

In connection with the composition of the 242-tone DRU, among the 26-tone DRUs corresponding to each pilot tone shift value, the odd-numbered 26-tone DRUs (e.g., in the case of p₁, 26-tone DRU-1 and 26-tone DRU-6; in the case of p₂, 26-tone DRU-3 and 26-tone DRU-8) may be configured to constitute 242-tone DRU-1. In addition, the even-numbered 26-tone DRUs (e.g., in the case of p₁, 26-tone DRU-2 and 26-tone DRU-7; in the case of p₂, 26-tone DRU-4 and 26-tone DRU-9) may be configured to constitute 242-tone DRU-2. That is, each 242-tone DRU may be composed of two 26-tone DRUs having identical pilot tone shift values, and during the process of constituting the 106-tone DRU, one pilot tone corresponding to one of the two identical pilot tone shift values may be converted into a data tone. Through this, for each 242-tone DRU, only the pilot tone of one 26-tone DRU corresponding to each pilot tone shift value may be used as the pilot tone of the 242-tone DRU.

Next, a method for shifting pilot tones in the 20 MHz bandwidth will be described in detail.

The 106-tone DRU may be formed through a combination of two 52-tone DRUs (and a null-tone combination). In this case, the 106-tone DRU may be composed of eight pilot tones based on the two 52-tone DRUs (i.e., four pilot tones of each 52-tone DRU). In this regard, among the eight pilot tones, four tones may be converted into data tones, and the remaining four tones may be used as pilot tones.

The four pilot tones may correspond to the pilot tones of two specific 26-tone DRUs, and between the pilot tones of the two 106-tone DRUs, the use of pilot tones at similar positions may not cause performance degradation. Therefore, representatively, in the 20 MHz bandwidth, it may be necessary to set the pilot tone positions of two 26-tone DRUs.

The pilot tone positions of the two 26-tone DRUs may be set in various manners, and a method of applying shifts to the pilot tones of each 26-tone DRU, as exemplified below, may be considered. This method is basically defined based on the shift of (7, 20), and two different pilot tone shift values among the values from -6 to +6 may be applied to configure the pilot tones, and various other cases may also be considered in addition to these examples. For example, similar to the 160 MHz bandwidth, the pilot-tone shift method may be defined by applying a different range based on other pilot tones of Method 1-1.
Example 1. [-a, +a], (where a = 1 or 2 or 3 or 4 or 5 or 6)
Example 2. [-a, -a+6], (where a = 0 or 1 or 2 or 3 or 4 or 5 or 6)

For the two 26-tone DRUs, the pilot tones within each 26-tone DRU may be mapped according to the pilot tone shift values, and such mapping may be determined/performed in consideration of the combination of smaller DRUs that constitute a larger DRU. That is, in consideration of the combination of smaller DRUs constituting a larger DRU, a specific value (i.e., a specific pilot-tone shift value) may be mapped to each DRU.

As described above, the two pilot tone shift values to be applied to the two 26-tone DRUs may be referred to as [p₁, p₂]. For example, each pilot tone shift value may be set to any value within a range from -6 to +6 (or, depending on the pilot tones of Method 1-1 being used, -5 may be used instead of -6 and/or +5 may be used instead of +6), such that p₁ < p₂ is satisfied.

In this regard, for the 26-tone DRU(s) that are not used in the formation of the 52-tone DRU (e.g., 26-tone DRU-5), any shift may be applied to the pilot tones, but it may be desirable, from an implementation perspective, to use one of the pilot-tone positions of Method 1-1 (e.g., (7, 20)).

With respect to mapping the pilot tones of each 26-tone DRU to the above-described shift values, the pilot tone shift values applied to the two 26-tone DRUs that constitute the 52-tone DRU may differ, and to maximize distribution, it may be necessary to use values located far apart (i.e., p₁ and p₂) as the pilot tone shift values.

Among the pilot tones of the two 52-tone DRUs that constitute the 106-tone DRU, four tones may be converted into data tones, and only the remaining four tones may be used as pilot tones. Therefore, the pilot tone shift values may be applied identically to the 26-tone DRUs that constitute each 52-tone DRU. For example, the pilot tone shift values of the two 26-tone DRUs that constitute each 52-tone DRU may be set to p₁ and p₂. Therefore, as the pilot tones of the 106-tone DRU, the pilot tones of one of the two 52-tone DRUs may be used. Alternatively, two 26-tone DRUs having different pilot tone shift values may be selected from each 52-tone DRU, and the pilot tones of the two selected 26-tone DRUs may be used as the pilot tones of the 106-tone DRU. That is, similar to the 52-tone DRU, in the case of the 106-tone DRU as well, the pilot-tone shift values of the two 26-tone DRUs that constitute the pilot tones may be p₁ and p₂.

Based on the above-described method, for the 20 MHz bandwidth, the 26-tone DRUs that use each pilot-tone shift value may be defined, by way of one example, as follows.
26-tone DRUs using p₁: 26-tone DRU-1, 26-tone DRU-2, 26-tone DRU-3, 26-tone DRU-4.
26-tone DRUs using p₂: 26-tone DRU-6, 26-tone DRU-7, 26-tone DRU-8, 26-tone DRU-9.

In each of the above-described pilot tone shift values, for the 26-tone DRUs located in the same order for p₁ and p₂, the pilot-tone shift values may be interchanged. For example, the pilot tone shift values of 26-tone DRU-1 and 26-tone DRU-6 may be interchanged. That is, p₂ may be used in 26-tone DRU-1, and p₁ may be used in 26-tone DRU-6. As another example, the pilot tone shift values of 26-tone DRU-2 and 26-tone DRU-7 may be interchanged. That is, p₂ may be used in 26-tone DRU-2, and p₁ may be used in 26-tone DRU-7.

In connection with the composition of the 106-tone DRU, among the 26-tone DRUs corresponding to each pilot tone shift value, the odd-numbered 26-tone DRUs (e.g., in the case of p₁, 26-tone DRU-1 and 26-tone DRU-3; in the case of p₂, 26-tone DRU-6 and 26-tone DRU-8) may be configured to constitute 106-tone DRU-1. In addition, the even-numbered 26-tone DRUs (e.g., in the case of p₁, 26-tone DRU-2 and 26-tone DRU-4; in the case of p₂, 26-tone DRU-7 and 26-tone DRU-9) may be configured to constitute 106-tone DRU-2. That is, each 106-tone DRU may be composed of two 26-tone DRUs having identical pilot tone shift values, and during the process of constituting the 106-tone DRU, one pilot tone corresponding to one of the two identical pilot tone shift values may be converted into a data tone. Through this, for each 106-tone DRU, only the pilot tone of one 26-tone DRU corresponding to each pilot tone shift value may be used as the pilot tone.

In the above-described Method 1-3, for the 106-tone DRU and the 996-tone DRU, it has been described that among the pilot tones of a smaller DRU, some are converted into data tones and some are used as pilot tones. In this regard, for 106-tone DRUs and 996-tone DRUs having odd indices, it may be advantageous, from an implementation perspective, to use the pilot tone of the smaller DRU having a lower index, among the smaller DRUs that constitute the corresponding larger DRU, as the pilot tone. In addition, for 106-tone DRUs and 996-tone DRUs having even indices, it may be advantageous, from an implementation perspective, to use the pilot tone of the smaller DRU having a higher index, among the smaller DRUs that constitute the corresponding larger DRU, as the pilot tone.

Alternatively, for 106-tone DRUs and 996-tone DRUs having odd indices, it may be advantageous, from an implementation perspective, to use the pilot tone of the smaller DRU having a higher index, among the smaller DRUs that constitute the corresponding larger DRU, as the pilot tone. In addition, for 106-tone DRUs and 996-tone DRUs having even indices, it may be advantageous, from an implementation perspective, to use the pilot tone of the smaller DRU having a lower index, among the smaller DRUs that constitute the corresponding larger DRU, as the pilot tone.

Alternatively, for 106-tone DRUs and 996-tone DRUs having odd and even indices, it may be advantageous, from an implementation perspective, to use, as the pilot tone, the pilot tone of the smaller DRU having a lower index among the smaller DRUs that constitute the corresponding larger DRU for negative subcarriers, and to use, as the pilot tone, the pilot tone of the smaller DRU having a higher index among the smaller DRUs that constitute the corresponding larger DRU for positive subcarriers.

Alternatively, for 106-tone DRUs and 996-tone DRUs having odd and even indices, it may be advantageous, from an implementation perspective, to use, as the pilot tone, the pilot tone of the smaller DRU having a higher index among the smaller DRUs that constitute the corresponding larger DRU for negative subcarriers, and to use, as the pilot tone, the pilot tone of the smaller DRU having a lower index among the smaller DRUs that constitute the corresponding larger DRU for positive subcarriers.

Alternatively, for 106-tone DRUs and 996-tone DRUs having odd and even indices, the pilot tone may be configured, for each pilot-shift order, by alternately using the pilot tones of the smaller DRUs that constitute the corresponding larger DRU in an order of lower index and higher index.

Alternatively, for 106-tone DRUs and 996-tone DRUs having odd and even indices, the pilot tone may be configured, for each pilot-shift order, by alternately using the pilot tones of the smaller DRUs that constitute the corresponding larger DRU in an order of higher index and lower index.

In connection with the foregoing methods, particularly when the pilot tone (7, 20) is used as a basis and the pilot tone shift values are arranged from a lower value to a higher value in such a manner that the values are symmetric with respect to sign (e.g., [p₁, p₂, p₃, p₄] = [-6, -3, +3, +6]), when mapping each pilot tone to the tone index of the entire bandwidth, pilot tone indices that are symmetric with respect to the DC tone may be formed (i.e., differing only in sign). Therefore, from an implementation perspective, it may be desirable to configure the pilot tone shift values in a symmetric manner.

In methods 1-1 through 1-2 described above, when a tone in a DRU at a position corresponding to the pilot position of an existing RRU of the same size is set as a pilot tone, if the corresponding tone is not an even-indexed tone, the nearest even-indexed tone within the corresponding DRU may be set as the pilot tone. In this case, the distinction between even and odd indices may be based on the tone index within the entire bandwidth rather than the tone order within the corresponding DRU.

Hereinafter, with respect to method 1-3, specific examples of DRU tone plans for the 20 MHz bandwidth and the 40 MHz bandwidth are described as representative examples.

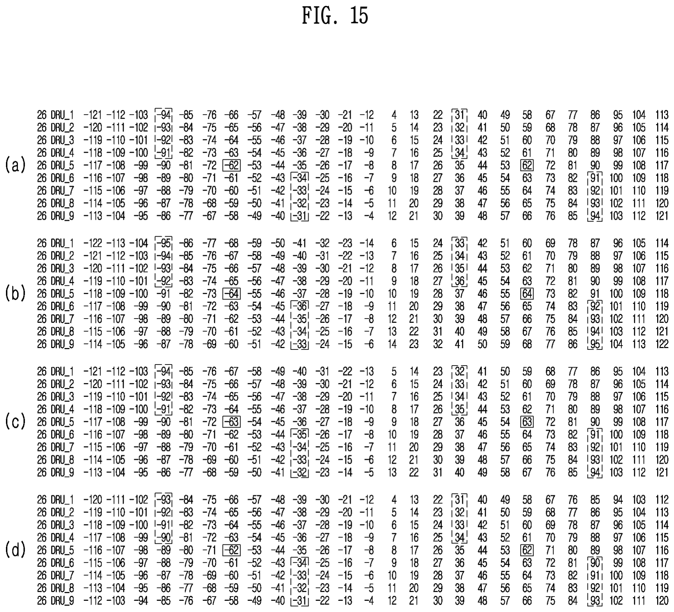

FIG. 15 illustrates a tone plan for a 26-tone DRU in a 20 MHz bandwidth according to an embodiment of the present disclosure.

### (Detailed example 1 of a 20 MHz DRU tone plan.)

As one example of a DRU tone plan for a 20 MHz bandwidth, the DC, guard, and null tones defined in the RRU (i.e., the legacy RU) tone plan for the 20 MHz bandwidth are maintained, and nine 26-tone DRUs may be defined by allocating the available tones to each DRU. Here, the tones for the 26-tone DRUs may be evenly distributed.

In this regard, based on a specific pilot tone position (e.g., (7, 20)), the pilot tones of the 26-tone DRU-1, 26-tone DRU-2, 26-tone DRU-3, and 26-tone DRU-4 may be shifted by "-3," the pilot tones of the 26-tone DRU-6, 26-tone DRU-7, 26-tone DRU-8, and 26-tone DRU-9 may be shifted by "+3," and the pilot tones of the 26-tone DRU-5 may remain unshifted.

Accordingly, referring to (a) of FIG. 15, in the DRU tone plan for the 20 MHz bandwidth, all DRUs may be based on pilot tones of +-{31, 32, 33, 34, 62, 91, 92, 93, 94}. For example, the pilot tones of the 26-tone DRU-1 through the 26-tone DRU-9 may be {-94, 31}, {-93, 32}, {-92, 33}, {-91, 34}, {-62, 62}, {-34, 91}, {-33, 92}, {-32, 93}, and {-31, 94}.

In the case of a 52-tone DRU, the pilot tones of the 52-tone DRU may be configured as a combination of the pilot tones of the two 26-tone DRUs constituting the DRU. Based on this, the 52-tone DRU may be configured with tones that are nearly evenly distributed and with sufficiently dispersed pilot tones. For example, the pilot tones of the 52-tone DRU-1, which is constituted by the 26-tone DRU-1 and the 26-tone DRU-6, may be {-94, -34, 31, 91}. The pilot tones of the 52-tone DRU-2, which is constituted by the 26-tone DRU-2 and the 26-tone DRU-7, may be {-93, -33, 32, 92}. The pilot tones of the 52-tone DRU-3, which is constituted by the 26-tone DRU-3 and the 26-tone DRU-8, may be {-92, -32, 33, 93}. The pilot tones of the 52-tone DRU-4, which is constituted by the 26-tone DRU-4 and the 26-tone DRU-9, may be {-91, -31, 34, 94}.

A 106-tone DRU may be constituted by two 52-tone DRUs and two additional tones. Here, the two additional tones may be null tones (e.g., +-{69, 122}) or DC tones (e.g., +-{2, 3}) in the 26-tone DRU and the 52-tone DRU. For example, the 106-tone DRU-1 is constituted by the 52-tone DRU-1 and the 52-tone DRU-3, and the pilot tones of the 106-tone DRU-1 may be configured by selecting one tone from {-94, -92}, one tone from {-34, -32}, one tone from {31, 33}, and one tone from {91, 93}. The four tones that are not selected may be used as data tones. In this case, in order to maximize a power boosting gain, the two additional tones may be -3 (or -2) and +122. In addition, the 106-tone DRU-2 is constituted by the 52-tone DRU-2 and the 52-tone DRU-4, and the pilot tones of the 106-tone DRU-2 may be configured by selecting one tone from {-93, -91}, one tone from {-33, -31}, one tone from {32, 34}, and one tone from {92, 94}. The four tones that are not selected may be used as data tones. In this case, in order to maximize a power boosting gain, the two additional tones may be -122 and +3 (or +2). In this regard, the tones of the 106-tone DRU-1 and the 106-tone DRU-2 may be mirror symmetric, and accordingly, it may be preferable to select pilot indices such that they have identical absolute values. As one example, the pilot tones of the 106-tone DRU-1 and the 106-tone DRU-2 may be {-94, -34, 33, 93} and {-93, -33, 34, 94}, respectively. Based on this, the 106-tone DRU may be configured with tones that are nearly evenly distributed and with sufficiently dispersed pilot tones. As another example, in order to further disperse pilot tones among DRUs, the pilot tones of the 106-tone DRU-1 and the 106-tone DRU-2 may be {-94, -34, 31, 91} and {-91, -31, 34, 94}, respectively. Additionally, in the aforementioned example of the 106-tone DRU, the additional tones of the 106-tone DRU-1 may be {-69, +122}, and the additional tones of the 106-tone DRU-2 may be {-122, +69}. Alternatively, the additional tones of the 106-tone DRU-1 may be {-122, +69}, and the additional tones of the 106-tone DRU-2 may be {-69, +122}.

### (Detailed example 2 of a 20 MHz DRU tone plan.)

As another example of a DRU tone plan in the 20 MHz bandwidth, the DC tones (with four additional DC tones +-{4, 5} added) and the guard tones defined in the RRU (i.e., the legacy RU) tone plan in the 20 MHz bandwidth are maintained, and nine 26-tone DRUs may be defined by allocating available tones to each DRU. Here, the tones for the 26-tone DRU may be evenly distributed.

In this regard, based on specific pilot tone positions (e.g., (7, 20)), the pilot tones of the 26-tone DRU-1, the 26-tone DRU-2, the 26-tone DRU-3, and the 26-tone DRU-4 may be shifted by '-3', the pilot tones of the 26-tone DRU-6, the 26-tone DRU-7, the 26-tone DRU-8, and the 26-tone DRU-9 may be shifted by '+3', and the pilot tones of the 26-tone DRU-5 may remain unshifted.

Accordingly, referring to (b) of FIG. 15, in the DRU tone plan in the 20 MHz bandwidth, all DRUs may be based on pilot tones +-{33, 34, 35, 36, 64, 92, 93, 94, 95}. For example, the pilot tones of the 26-tone DRU-1 through the 26-tone DRU-9 may be {-95, 33}, {-94, 34}, {-93, 35}, {-92, 36}, {-64, 64}, {-36, 92}, {-35, 93}, {-34, 94}, and {-33, 95}.

In the case of a 52-tone DRU, the pilot tones of the 52-tone DRU may be configured as a combination of the pilot tones of the two 26-tone DRUs that constitute the DRU. Based on this, the 52-tone DRU may be composed of nearly evenly distributed tones and sufficiently dispersed pilot tones. For example, the pilot tones of the 52-tone DRU-1, which is composed of the 26-tone DRU-1 and the 26-tone DRU-6, may be {-95, -36, 33, 92}. The pilot tones of the 52-tone DRU-2, which is composed of the 26-tone DRU-2 and the 26-tone DRU-7, may be {-94, -35, 34, 93}. The pilot tones of the 52-tone DRU-3, which is composed of the 26-tone DRU-3 and the 26-tone DRU-8, may be {-93, -34, 35, 94}. The pilot tones of the 52-tone DRU-4, which is composed of the 26-tone DRU-4 and the 26-tone DRU-9, may be {-92, -33, 36, 95}.

A 106-tone DRU may be configured from two 52-tone DRUs and two additional tones. Here, the two additional tones may be two DC tones (e.g., +-{4, 5}). For example, the 106-tone DRU-1 may be composed of the 52-tone DRU-1 and the 52-tone DRU-3, and the pilot tones of the 106-tone DRU-1 may be configured by selecting one tone from {-95, -93}, one tone from {-36, -34}, one tone from {33, 35}, and one tone from {92, 94}. The four tones that are not selected may be used as data tones. In this case, to maximize the power boosting gain, the two additional tones may be -5 and +4. In addition, the 106-tone DRU-2 may be composed of the 52-tone DRU-2 and the 52-tone DRU-4, and the pilot tones of the 106-tone DRU-2 may be configured by selecting one tone from {-94, -92}, one tone from {-35, -33}, one tone from {34, 36}, and one tone from {93, 95}. The four tones that are not selected may be used as data tones. In this case, to maximize the power boosting gain, the two additional tones may be -4 and +5. In this regard, the tones of the 106-tone DRU-1 and the 106-tone DRU-2 may be mirror symmetric, and accordingly, it may be preferable to select pilot indices having the same absolute value. As one example, the pilot tones of the 106-tone DRU-1 and the 106-tone DRU-2 may be {-95, -36, 35, 94} and {-94, -35, 36, 95}, respectively. Based on this, the 106-tone DRU may be composed of nearly evenly distributed tones and sufficiently dispersed pilot tones. As another example, to further disperse the pilot tones across DRUs, the pilot tones of the 106-tone DRU-1 and the 106-tone DRU-2 may be {-95, -36, 33, 92} and {-92, -33, 36, 95}, respectively.

### (Detailed example 3 of a 20 MHz DRU tone plan.)

As another example of a DRU tone plan in a 20 MHz bandwidth, the DC tones (with an additional DC tone +-{4} added) and the guard tones (with an additional guard tone +-{122} added) defined in the RRU (i.e., the legacy RU) tone plan in the 20 MHz bandwidth may be maintained, and nine 26-tone DRUs may be defined by allocating the available tones to each DRU. Here, the tones for the 26-tone DRU may be evenly distributed.

In this regard, based on specific pilot tone locations (e.g., (7, 20)), the pilot tones of the 26-tone DRU-1, the 26-tone DRU-2, the 26-tone DRU-3, and the 26-tone DRU-4 may be shifted by "-3," the pilot tones of the 26-tone DRU-6, the 26-tone DRU-7, the 26-tone DRU-8, and the 26-tone DRU-9 may be shifted by "+3," and the pilot tones of the 26-tone DRU-5 may remain unshifted.

Accordingly, referring to (c) of FIG. 15, in the DRU tone plan in the 20 MHz bandwidth, all DRUs may be based on the pilot tones +-{32, 33, 34, 35, 63, 91, 92, 93, 94}. For example, the pilot tones of the 26-tone DRU-1 through the 26-tone DRU-9 may be {-94, 32}, {-93, 33}, {-92, 34}, {-91, 35}, {-63, 63}, {-35, 91}, {-34, 92}, {-33, 93}, and {-32, 94}.

In the case of the 52-tone DRU, the pilot tones of the 52-tone DRU may be configured as a combination of the pilot tones of the two 26-tone DRUs that constitute the DRU. Based on this, the 52-tone DRU may be composed of tones that are almost evenly distributed and pilot tones that are sufficiently distributed. For example, the pilot tones of the 52-tone DRU-1, which is composed of the 26-tone DRU-1 and the 26-tone DRU-6, may be {-94, -35, 32, 91}. The pilot tones of the 52-tone DRU-2, which is composed of the 26-tone DRU-2 and the 26-tone DRU-7, may be {-93, -34, 33, 92}. The pilot tones of the 52-tone DRU-3, which is composed of the 26-tone DRU-3 and the 26-tone DRU-8, may be {-92, -33, 34, 93}. The pilot tones of the 52-tone DRU-4, which is composed of the 26-tone DRU-4 and the 26-tone DRU-9, may be {-91, -32, 35, 94}.

The 106-tone DRU may be configured of two 52-tone DRUs and two additional tones. Here, the two additional tones may be DC tones and may be selected from +-{4, 122}. For example, the 106-tone DRU-1 may be configured of the 52-tone DRU-1 and the 52-tone DRU-3, and the pilot tones of the 106-tone DRU-1 may be configured by selecting one tone from {-94, -92}, one tone from {-35, -33}, one tone from {32, 34}, and one tone from {91, 93}. The four tones that are not selected may be used as data tones. In this case, in order to maximize the power boosting gain, the two additional tones may be -4 and +122. In addition, the 106-tone DRU-2 may be configured of the 52-tone DRU-2 and the 52-tone DRU-4, and the pilot tones of the 106-tone DRU-2 may be configured by selecting one tone from {-93, -91}, one tone from {-34, -32}, one tone from {33, 35}, and one tone from {92, 94}. The four tones that are not selected may be used as data tones. In this case, in order to maximize the power boosting gain, the two additional tones may be -122 and +4. In this regard, the tones of the 106-tone DRU-1 and the 106-tone DRU-2 may be mirror symmetric, and accordingly, it may be desirable to select the pilot indices so as to have the same absolute values. As one example, the pilot tones of the 106-tone DRU-1 and the 106-tone DRU-2 may be {-94, -35, 34, 93} and {-93, -34, 35, 94}, respectively. Based on this, the 106-tone DRU may be composed of tones that are almost evenly dispersed and pilot tones that are sufficiently dispersed. As another example, in order to further disperse the pilot tones between the DRUs, the pilot tones of the 106-tone DRU-1 and the 106-tone DRU-2 may be {-94, -35, 32, 91} and {-91, -32, 35, 94}, respectively.

### (Detailed example 4 of a 20 MHz DRU tone plan.)

As another example of a DRU tone plan in a 20 MHz bandwidth, the DC tones and guard tones (with additional guard tones +-{122, 121} added) defined in the RRU (i.e., legacy RU) tone plan of the 20 MHz bandwidth may be maintained, and nine 26-tone DRUs may be defined by allocating available tones to each DRU. Here, the tones for the 26-tone DRU may be evenly distributed.

In this regard, based on specific pilot tone positions (e.g., (7, 20)), the pilot tones of the 26-tone DRU-1, the 26-tone DRU-2, the 26-tone DRU-3, and the 26-tone DRU-4 may be shifted by "-3," the pilot tones of the 26-tone DRU-6, the 26-tone DRU-7, the 26-tone DRU-8, and the 26-tone DRU-9 may be shifted by "+3," and the pilot tone of the 26-tone DRU-5 may remain unshifted.

Accordingly, referring to FIG. 15(d), in the DRU tone plan for the 20 MHz bandwidth, all DRUs may be based on pilot tones of +-{31, 32, 33, 34, 62, 90, 91, 92, 93}. For example, the pilot tones of the 26-tone DRU-1 through the 26-tone DRU-9 may be {-93, 31}, {-92, 32}, {-91, 33}, {-90, 34}, {-62, 62}, {-34, 90}, {-33, 91}, {-32, 92}, and {-31, 93}.

In the case of the 52-tone DRU, the pilot tones of the 52-tone DRU may be set as a combination of the pilot tones of the two 26-tone DRUs constituting the DRU. Based on this, the 52-tone DRU may be composed of nearly evenly distributed tones and sufficiently distributed pilot tones. For example, the pilot tones of the 52-tone DRU-1, which is composed of the 26-tone DRU-1 and the 26-tone DRU-6, may be {-93, -34, 31, 90}. The pilot tones of the 52-tone DRU-2, which is composed of the 26-tone DRU-2 and the 26-tone DRU-7, may be {-92, -33, 32, 91}. The pilot tones of the 52-tone DRU-3, which is composed of the 26-tone DRU-3 and the 26-tone DRU-8, may be {-91, -32, 33, 92}. The pilot tones of the 52-tone DRU-4, which is composed of the 26-tone DRU-4 and the 26-tone DRU-9, may be {-90, -31, 34, 93}.

The 106-tone DRU may be constituted by two 52-tone DRUs and two additional tones. Here, the two additional tones may be DC tones, and two tones among +-{121, 122} may be selected. For example, the 106-tone DRU-1 may be constituted by the 52-tone DRU-1 and the 52-tone DRU-3, and the pilot tones of the 106-tone DRU-1 may be constituted by selecting one tone among {-93, -91}, one tone among {-34, -32}, one tone among {31, 33}, and one tone among {90, 92}. The four tones that are not selected may be used as data tones. In this case, in order to maximize the power boosting gain, the two additional tones may be -122 and +121. In addition, the 106-tone DRU-2 may be constituted by the 52-tone DRU-2 and the 52-tone DRU-4, and the pilot tones of the 106-tone DRU-2 may be constituted by selecting one tone among {-92, -90}, one tone among {-33, -31}, one tone among {32, 34}, and one tone among {91, 93}. The four tones that are not selected may be used as data tones. In this case, in order to maximize the power boosting gain, the two additional tones may be -121 and +122. In this regard, the tones of the 106-tone DRU-1 and the 106-tone DRU-2 may be mirror symmetric, and accordingly, it may be desirable that the pilot indices be selected to have the same absolute value. As one example, the pilot tones of the 106-tone DRU-1 and the 106-tone DRU-2 may be {-93, -34, 33, 92} and {-92, -33, 34, 93}, respectively. Based on this, the 106-tone DRU may be constituted by tones that are almost evenly distributed and pilot tones that are sufficiently distributed. As another example, in order to further distribute the pilot tones among DRUs, the pilot tones of the 106-tone DRU-1 and the 106-tone DRU-2 may be {-93, -34, 31, 90} and {-90, -31, 34, 93}, respectively.

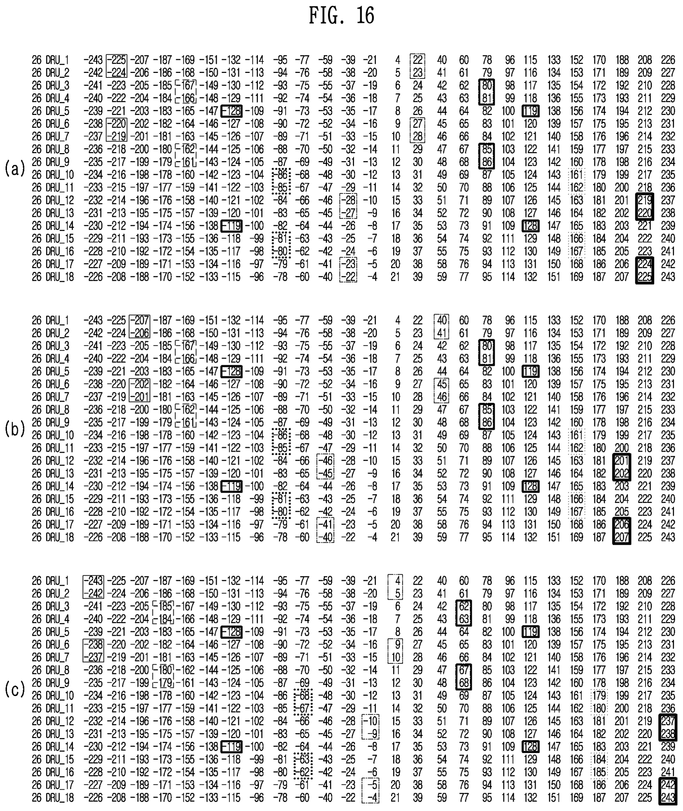

FIG. 16 illustrates a tone plan for a 26-tone DRU in a 40 MHz bandwidth according to an embodiment of the present disclosure.

In relation to the DRU tone plan in a 40 MHz bandwidth, the DC, guard, and null tones defined in the RRU (i.e., legacy RU) tone plan for the 40 MHz bandwidth may be maintained, and eighteen 26-tone DRUs may be defined by allocating available tones to each DRU. Here, tones for the 26-tone DRU may be evenly distributed. In this case, as described above in the present disclosure, a method of defining/setting pilot tones for the 26-tone DRU by applying pilot tone shift values may be considered.

Hereinafter, with respect to the pilot tones for DRUs in a 40 MHz bandwidth, detailed DRU tone plans according to examples of setting four pilot tone shift values [p₁, p₂, p₃, p₄] are described. In this regard, the value p₁ is applied to the 26-tone DRU-1, 26-tone DRU-2, 26-tone DRU-6, and 26-tone DRU-7, the value p₂ is applied to the 26-tone DRU-3, 26-tone DRU-4, 26-tone DRU-8, and 26-tone DRU-9, the value p₃ is applied to the 26-tone DRU-10, 26-tone DRU-11, 26-tone DRU-15, and 26-tone DRU-16, and the value p₄ is applied to the 26-tone DRU-12, 26-tone DRU-13, 26-tone DRU-17, and 26-tone DRU-18. That is, no pilot tone shift value is applied to the 26-tone DRU-5 and 26-tone DRU-14.

### (Detailed example 1 of a 40 MHz DRU tone plan.)

For example, the four pilot tone shift values [p₁, p₂, p₃, p₄] may be set to [-5, -2, 2, 5].

Referring to (a) of FIG. 16, based on a specific pilot-tone position (e.g., (7, 20)), pilot tones of the 26-tone DRUs may be defined as follows. Based on the shift according to p₁, the pilot tones of 26-tone DRU-1 may be {-225, 22}, those of 26-tone DRU-2 may be {-224, 23}, those of 26-tone DRU-6 may be {-220, 27}, and those of 26-tone DRU-7 may be {-219, 28}. Further, based on the shift according to p₂, the pilot tones of 26-tone DRU-3 may be {-167, 80}, those of 26-tone DRU-4 may be {-166, 81}, those of 26-tone DRU-8 may be {-162, 85}, and those of 26-tone DRU-9 may be {-161, 86}. Further, based on the shift according to p₃, the pilot tones of 26-tone DRU-10 may be {-86, 161}, those of 26-tone DRU-11 may be {-85, 162}, those of 26-tone DRU-15 may be {-81, 166}, and those of 26-tone DRU-16 may be {-80, 167}. Further, based on the shift according to p₄, the pilot tones of 26-tone DRU-12 may be {-28, 219}, those of 26-tone DRU-13 may be {-27, 220}, those of 26-tone DRU-17 may be {-23, 224}, and those of 26-tone DRU-18 may be {-22, 225}. Further, based on no shift being applied, the pilot tones of 26-tone DRU-5 may be {-128, 119}, and the pilot tones of 26-tone DRU-14 may be {-119, 128}.

Additionally, based on Table 5 described above, a 52-tone DRU may be formed as a combination of two 26-tone DRUs. In this regard, the pilot tones of 52-tone DRU-1 may be {-225, -86, 22, 161}, the pilot tones of 52-tone DRU-2 may be {-224, -85, 23, 162}, the pilot tones of 52-tone DRU-3 may be {-167, -28, 80, 219}, the pilot tones of 52-tone DRU-4 may be {-166, -27, 81, 220}, the pilot tones of 52-tone DRU-5 may be {-220, -81, 27, 166}, the pilot tones of 52-tone DRU-6 may be {-219, -80, 28, 167}, the pilot tones of 52-tone DRU-7 may be {-162, -23, 85, 224}, and the pilot tones of 52-tone DRU-8 may be {-161, -22, 86, 225}.

Additionally, based on Table 5 described above, a 106-tone DRU may be constituted as a combination of two 52-tone DRUs and two additional tones. In this regard, the pilot tones of 106-tone DRU-1 may be configured by selecting one tone from among {-225, -220}, one tone from among {-86, -81}, one tone from among {22, 27}, and one tone from among {161, 166}, and the four tones that are not selected may be used as data tones. The pilot tones of 106-tone DRU-2 may be configured by selecting one tone from among {-224, -219}, one tone from among {-85, -80}, one tone from among {23, 28}, and one tone from among {162, 167}, and the four tones that are not selected may be used as data tones. The pilot tones of 106-tone DRU-3 may be configured by selecting one tone from among {-167, -162}, one tone from among {-28, -23}, one tone from among {80, 85}, and one tone from among {219, 224}, and the four tones that are not selected may be used as data tones. The pilot tones of 106-tone DRU-4 may be configured by selecting one tone from among {-166, -161}, one tone from among {-27, -22}, one tone from among {81, 86}, and one tone from among {220, 225}, and the four tones that are not selected may be used as data tones. Additionally, tones of 106-tone DRU-1 and 106-tone DRU-2 may be configured based on mirror symmetry. As one example, pilot tones of the 106-tone DRUs may be configured using +-{225, 219, 167, 161, 86, 80, 28, 22}. Additionally, with respect to the two additional tones, two tones may be added for each DRU from among the null tones +-{56, 57, 190, 191}. As one example, {-191, 56}, {-190, 57}, {-57, 190}, and {-56, 191} may be allocated respectively to different 106-tone DRUs.

Additionally, based on Table 5 described above, a 242-tone DRU may be constituted as a combination of two 106-tone DRUs, one 26-tone DRU, and four additional tones. In this regard, the pilot tones of the 242-tone DRU may correspond to a combination of the pilot tones of the two 106-tone DRUs forming the 242-tone DRU. That is, the 26-tone DRU included in the configuration of the 242-tone DRU is a 26-tone DRU that is not used in forming a 52-tone DRU (e.g., 26-tone DRU-1 or 26-tone DRU-14), and the pilot tones of the corresponding 26-tone DRU are converted into data tones. As one example, the pilot tones of the 242-tone DRU may be configured using +-{225, 219, 167, 161, 86, 80, 28, 22}. Additionally, with respect to the four additional tones, four tones may be added for each DRU from among the null tones +-{3, 110, 137, 244}. As one example, {-244, -110, 3, 137} and {-137, -3, 110, 244} may be allocated respectively to different 242-tone DRUs.

### (Detailed example 2 of a 40 MHz DRU tone plan.)

For example, the four pilot tone shift values [p₁, p₂, p₃, p₄] may be set to [-4, -2, 2, 4].

Referring to (b) of FIG. 16, based on a specific pilot tone position (e.g., (7, 20)), the pilot tone of 26-tone DRU-1 is {-207, 40}, the pilot tone of 26-tone DRU-2 is {-206, 41}, the pilot tone of 26-tone DRU-6 is {-202, 45}, and the pilot tone of 26-tone DRU-7 is {-201, 46}, based on the shift according to the value of p₁. In addition, based on the shift according to the value of p₂, the pilot tone of 26-tone DRU-3 is {-167, 80}, the pilot tone of 26-tone DRU-4 is {-166, 81}, the pilot tone of 26-tone DRU-8 is {-162, 85}, and the pilot tone of 26-tone DRU-9 is {-161, 86}. In addition, based on the shift according to the value of p₃, the pilot tone of 26-tone DRU-10 is {-86, 161}, the pilot tone of 26-tone DRU-11 is {-85, 162}, the pilot tone of 26-tone DRU-15 is {-81, 166}, and the pilot tone of 26-tone DRU-16 is {-80, 167}. In addition, based on the shift according to the value of p₄, the pilot tone of 26-tone DRU-12 is {-46, 201}, the pilot tone of 26-tone DRU-13 is {-45, 202}, the pilot tone of 26-tone DRU-17 is {-41, 206}, and the pilot tone of 26-tone DRU-18 is {-40, 207}. In addition, based on no shift being applied, the pilot tone of 26-tone DRU-5 is {-128, 119}, and the pilot tone of 26-tone DRU-14 is {-119, 128}.

Additionally, based on Table 5 described above, a 52-tone DRU may be configured as a combination of two 26-tone DRUs. In this regard, the pilot tones of 52-tone DRU-1 may be {-207, -86, 40, 161}, the pilot tones of 52-tone DRU-2 may be {-206, -85, 41, 162}, the pilot tones of 52-tone DRU-3 may be {-167, -46, 80, 201}, the pilot tones of 52-tone DRU-4 may be {-166, -45, 81, 202}, the pilot tones of 52-tone DRU-5 may be {-202, -81, 45, 166}, the pilot tones of 52-tone DRU-6 may be {-201, -80, 46, 167}, the pilot tones of 52-tone DRU-7 may be {-162, -41, 85, 206}, and the pilot tones of 52-tone DRU-8 may be {-161, -40, 86, 207}.

Additionally, based on Table 5 described above, a 106-tone DRU may be configured as a combination of two 52-tone DRUs and two additional tones. In this regard, the pilot tones of 106-tone DRU-1 may be configured by selecting one tone from {-207, -202}, one tone from {-86, -81}, one tone from {40, 45}, and one tone from {161, 166}, and the four tones that are not selected may be used as data tones. The pilot tones of 106-tone DRU-2 may be configured by selecting one tone from {-206, -201}, one tone from {-85, -80}, one tone from {41, 46}, and one tone from {162, 167}, and the four tones that are not selected may be used as data tones. The pilot tones of 106-tone DRU-3 may be configured by selecting one tone from {-167, - 162}, one tone from {-45, -41}, one tone from {80, 85}, and one tone from {201, 206}, and the four tones that are not selected may be used as data tones. The pilot tones of 106-tone DRU-4 may be configured by selecting one tone from {-166, -161}, one tone from {-45, -40}, one tone from {81, 86}, and one tone from {202, 207}, and the four tones that are not selected may be used as data tones. Additionally, the tones of 106-tone DRU-1 and 106-tone DRU-2 may be configured based on the establishment of mirror symmetry. As one example, the pilot tones of the 106-tone DRUs may be configured using +-{207, 201, 167, 161, 86, 80, 46, 40}. Furthermore, regarding the two additional tones, two tones may be added for each DRU from the null tones +-{56, 57, 190, 191}. As one example, {-191, 56}, {-190, 57}, {-57, 190}, and {-56, 191} may be allocated to different 106-tone DRUs, respectively.

Additionally, based on Table 5 described above, a 242-tone DRU may be configured as a combination of two 106-tone DRUs, one 26-tone DRU, and four additional tones. In this regard, the pilot tones of the 242-tone DRU may correspond to the combination of the pilot tones of the two 106-tone DRUs that constitute the 242-tone DRU. That is, the 26-tone DRU included in the configuration of the 242-tone DRU is a 26-tone DRU that is not used in the configuration of the 52-tone DRU (e.g., 26-tone DRU-1 or 26-tone DRU-14), and the pilot tones of this 26-tone DRU are converted into data tones. For example, the pilot tones of the 242-tone DRU may be configured using +-{207, 201, 167, 161, 86, 80, 46, 40}. Additionally, with respect to the four additional tones, four tones may be added for each DRU from the null tones +-{3, 110, 137, 244}. As one example, {-244, -110, 3, 137} and {-137, -3, 110, 244} may be allocated to different 242-tone DRUs, respectively.

### (Detailed example 3 of a 40 MHz DRU tone plan.)

For example, the four pilot tone shift values [p₁, p₂, p₃, p₄] may be set to [-6, -3, 3, 6].

Referring to (c) of FIG. 16, based on specific pilot tone positions (e.g., (7, 20)), the pilot tones may be configured as follows, based on the shift corresponding to p₁, the pilot tones of 26-tone DRU-1, 26-tone DRU-2, 26-tone DRU-6, and 26-tone DRU-7 may be {-243, 4}, {-242, 5}, {-238, 9}, and {-237, 10}, respectively. Based on the shift corresponding to p₂, the pilot tones of 26-tone DRU-3, 26-tone DRU-4, 26-tone DRU-8, and 26-tone DRU-9 may be {-185, 62}, {-184, 63}, {-180, 67}, and {-179, 68}, respectively. Based on the shift corresponding to p₃, the pilot tones of 26-tone DRU-10, 26-tone DRU-11, 26-tone DRU-15, and 26-tone DRU-16 may be {-68, 179}, {-67, 180}, {-63, 184}, and {-62, 185}, respectively. Based on the shift corresponding to p₄, the pilot tones of 26-tone DRU-12, 26-tone DRU-13, 26-tone DRU-17, and 26-tone DRU-18 may be {-10, 237}, {-9, 238}, {-5, 242}, and {-4, 243}, respectively. Additionally, based on no shift being applied, the pilot tones of 26-tone DRU-5 and 26-tone DRU-14 may be {-128, 119} and {-119, 128}, respectively.

Additionally, based on Table 5 described above, a 52-tone DRU may be configured as a combination of two 26-tone DRUs. In this regard, the pilot tones of 52-tone DRU-1 may be {-243, -68, 4, 179}, the pilot tones of 52-tone DRU-2 may be {-242, -67, 5, 180}, the pilot tones of 52-tone DRU-3 may be {-185, -10, 62, 237}, the pilot tones of 52-tone DRU-4 may be {-184, -9, 63, 237}, the pilot tones of 52-tone DRU-5 may be {-238, -63, 9, 184}, the pilot tones of 52-tone DRU-6 may be {-237, -62, 10, 185}, the pilot tones of 52-tone DRU-7 may be {-180, -5, 67, 242}, and the pilot tones of 52-tone DRU-8 may be {-179, -4, 68, 243}.

Additionally, based on Table 5 described above, a 106-tone DRU may be configured as a combination of two 52-tone DRUs and two additional tones. In this regard, the pilot tones of 106-tone DRU-1 may be configured by selecting one tone from {-243, -238}, one tone from {-68, -63}, one tone from {4, 9}, and one tone from {179, 184}, and the four tones that are not selected may be used as data tones. The pilot tones of 106-tone DRU-2 may be configured by selecting one tone from {-242, -237}, one tone from {-67, -62}, one tone from {5, 10}, and one tone from {180, 185}, and the four tones that are not selected may be used as data tones. The pilot tones of 106-tone DRU-3 may be configured by selecting one tone from {-185, - 180}, one tone from {-10, -5}, one tone from {62, 67}, and one tone from {237, 242}, and the four tones that are not selected may be used as data tones. The pilot tones of 106-tone DRU-4 may be configured by selecting one tone from {-184, -179}, one tone from {-9, -4}, one tone from {63, 68}, and one tone from {238, 243}, and the four tones that are not selected may be used as data tones. Additionally, the tones of 106-tone DRU-1 and 106-tone DRU-2 may be configured based on the establishment of mirror symmetry. As one example, the pilot tones of the 106-tone DRUs may be configured using +-{243, 237, 185, 179, 68, 62, 10, 4}. Additionally, with respect to the two additional tones, two tones may be added for each DRU from the null tones +-{56, 57, 190, 191}. As one example, {-191, 56}, {-190, 57}, {-57, 190}, and {-56, 191} may be assigned to different 106-tone DRUs, respectively.

Additionally, based on Table 5 described above, a 242-tone DRU may be configured as a combination of two 106-tone DRUs, one 26-tone DRU, and four additional tones. In this regard, the pilot tones of the 242-tone DRU may correspond to a combination of the pilot tones of the two 106-tone DRUs that constitute it. That is, the 26-tone DRU included in the configuration of the 242-tone DRU is a 26-tone DRU that is not used in the configuration of a 52-tone DRU (e.g., 26-tone DRU-1 or 26-tone DRU-14), and the pilot tones of that 26-tone DRU are converted into data tones and used. For example, the pilot tones of the 242-tone DRU may be configured using +-{243, 237, 185, 179, 68, 62, 10, 4}. Additionally, with respect to the four additional tones, four tones may be added for each DRU from the null tones +-{3, 110, 137, 244}. As one example, {-244, -110, 3, 137} and {-137, -3, 110, 244} may be assigned respectively to different 242-tone DRUs.

### Embodiment 2

The present embodiment relates to an approach for designing/defining pilot tones for DRUs of various sizes by utilizing pilot tones that have been previously defined.

In this regard, for each bandwidth (e.g., a bandwidth of 20 MHz / 40 MHz / 80 MHz / 160 MHz, etc.), data tones and pilot tones allocated to each DRU may be distributed across the available subcarriers. For the pilot tones of a DRU, pilot tones used in an RRU tone plan of the same size as the DRU may be allocated to each DRU.

A method of designing/defining pilot tones of a DRU by utilizing existing pilot tones may be based on one or more of the approaches described below.

### (Method 2-1)

Pilot tones of a specific RRU may be allocated as pilot tones of a specific DRU. Alternatively, pilot tones of an RRU having the same index may be allocated as pilot tones of a DRU. For example, pilot tones of a first 26-tone RRU may be defined as pilot tones of a first 26-tone DRU.

This approach may be convenient from an implementation standpoint; however, it may be undesirable from a performance standpoint, since the pilot tones may not be sufficiently distributed.

### (Method 2-2)

Pilot tones of an RRU may be allocated as pilot tones of a corresponding DRU by utilizing a mapping rule between the RRU and the DRU.

When a DRU is set/defined so as to be indicated by utilizing an existing RU allocation scheme, a method of mapping a specific DRU to each RRU may be defined. By utilizing this, pilot tones of an RRU corresponding to a specific DRU may be allocated as pilot tones of the DRU.

This approach may be undesirable from a performance standpoint (since the pilot tones may not be sufficiently distributed). However, when the approach is applied to a DRU having a size of 52 tones or greater, the pilot tones of the DRU are defined based on pilot tones of a one-step smaller DRU that composes it, and therefore the approach may be convenient from an implementation standpoint.

### (Method 2-3)

A method of allocating pilot tones that are evenly distributed may be considered.

The above-described Methods 2-1 and 2-2 may exhibit degraded performance in that adjacent pilot tones are allocated to DRUs. Accordingly, it may be desirable to allocate distributed pilot tones to each DRU.

For example, in a specific bandwidth, pilot tones may be selected in units of a value obtained by dividing the total number of pilot tones defined in an RRU tone plan of a specific size by the number of pilot tones defined in one RRU of the same size (which is identical to the number of pilot tones of a DRU of the same size), and the selected pilot tones may be allocated to one DRU of the same size.

In the following description, {a, b, c, ...} denotes the a-th pilot tone, the b-th pilot tone, the c-th pilot tone, ... among the pilot tones defined in a particular RRU tone plan of each bandwidth.

First, a method of allocating pilot tones for a 26-tone DRU is described.

In a 20 MHz bandwidth, since a total of 18 pilot tones are defined in the tone plan of a 26-tone RRU, and 2 pilot tones are defined for each 26-tone RRU, pilot tones may be selected in units of 9 and allocated to each 26-tone DRU. That is, for each of the 9 26-tone DRUs, one of {1,10}, {2,11}, {3,12}, {4,13}, {5,14}, {6,15}, {7,16}, {8,17}, {9,18} may be allocated as pilot tones.

In a 40 MHz bandwidth, since a total of 36 pilot tones are defined in the tone plan of a 26-tone RRU, and 2 pilot tones are defined for each 26-tone RRU, pilot tones may be selected in units of 18 and allocated to each 26-tone DRU. That is, for each of the 18 26-tone DRUs, one of {1,19}, {2,20}, {3,21}, {4,22}, {5,23}, {6,24}, {7,25}, {8,26}, {9,27}, {10,28}, {11,29}, {12,30}, {13,31}, {14,32}, {15,33}, {16,34}, {17,35}, {18,36} may be allocated as pilot tones.

In an 80 MHz bandwidth, since a total of 72 pilot tones are defined in the tone plan of a 26-tone RRU, and 2 pilot tones are defined for each 26-tone RRU, pilot tones may be selected in units of 36 and allocated to each 26-tone DRU. That is, for each of the 36 26-tone DRUs, one of {1,37}, {2,38}, {3,39}, {4,40}, {5,41}, {6,42}, {7,43}, {8,44}, {9,45}, {10,46}, {11,47}, {12,48}, {13,49}, {14,50}, {15,51}, {16,52}, {17,53}, {18,54}, {19,55}, {20,56}, {21,57}, {22,58}, {23,59}, {24,60}, {25,61}, {26,62}, {27,63}, {28,64}, {29,65}, {30,66}, {31,67}, {32,68}, {33,69}, {34,70}, {35,71}, {36,72} may be allocated as pilot tones.

In a 160 MHz bandwidth, since a total of 144 pilot tones are defined in the tone plan of a 26-tone RRU, and 2 pilot tones are defined for each 26-tone RRU, pilot tones may be selected in units of 72 and allocated to each 26-tone DRU. That is, for each of the 72 26-tone DRUs, one of {1,73}, {2,74}, {3,75}, {4,76}, {5,77}, {6,78}, {7,79}, {8,80}, {9,81}, {10,82}, {11,83}, {12,84}, {13,85}, {14,86}, {15,87}, {16,88}, {17,89}, {18,90}, {19,91}, {20,92}, {21,93}, {22,94}, {23,95}, {24,96}, {25,97}, {26,98}, {27,99}, {28,100}, {29,101}, {30,102}, {31,103}, {32,104}, {33,105}, {34,106}, {35,107}, {36,108}, {37,109}, {38,110}, {39,111}, {40,112}, {41,113}, {42,114}, {43,115}, {44,116}, {45,117}, {46,118}, {47,119}, {48,120}, {49,121}, {50,122}, {51,123}, {52,124}, {53,125}, {54,126}, {55,127}, {56,128}, {57,129}, {58,130}, {59,131}, {60,132}, {61,133}, {62,134}, {63,135}, {64,136}, {65,137}, {66,138}, {67,139}, {68,140}, {69,141}, {70,142}, {71,143}, {72,144} may be allocated as pilot tones.

Expressed as a general equation for pilot-tone allocation in each bandwidth, each pilot tone belongs to the n-th 26-tone DRU, where *n* may be "mod(pilot tone index - 1, *a*) + 1," and *a* may be the number of 26-tone DRUs (or the pilot-tone index gap assigned to one DRU). Here, mod() denotes the modulo operation. In this case, the pilot tone pairs listed above may be allocated sequentially starting from the first DRU. Additionally, instead of using the number of 26-tone DRUs for a, other values such as the number of 26-tone DRUs minus 1 or plus 1 may be used, and the "+1" at the end of the formula may also be replaced with other values such as "+2" or "+3."

Additionally or alternatively, pilot tones may be allocated according to the formula "n = mod(mod(pilot tone index - 1, a) + b - 1, a) + 1." Here, *a* may be the number of 26-tone DRUs (or the pilot-tone index gap assigned to one DRU), and *b* may be a specific integer constant. For example, when b is 1, the pilot-tone combinations listed above may be allocated starting from the first DRU; when *b* is 2, allocation may begin from the second DRU; and when *b* is 3, allocation may begin from the third DRU in a cyclic-shift manner. That is, when b is 1, the last pilot-tone combination may be allocated to the last DRU; when *b* is 2, to the first DRU; and when *b* is 3, to the second DRU.

Next, a method of allocating pilot tones for a 52-tone DRU is described.

In a 20 MHz bandwidth, since a total of 16 pilot tones are defined in the tone plan of a 52-tone RRU, and four pilot tones are defined for each 52-tone RRU, pilot tones may be selected in units of 4 and allocated to each 52-tone DRU. That is, for each of the four 52-tone DRUs, one of {1,5,9,13}, {2,6,10,14}, {3,7,11,15}, {4,8,12,16} may be allocated as pilot tones.

In a 40 MHz bandwidth, since a total of 32 pilot tones are defined in the tone plan of a 52-tone RRU, and four pilot tones are defined for each 52-tone RRU, pilot tones may be selected in units of 8 and allocated to each 52-tone DRU. That is, for each of the eight 52-tone DRUs, one of {1,9,17,25}, {2,10,18,26}, {3,11,19,27}, {4,12,20,28}, {5,13,21,29}, {6,14,22,30}, {7,15,23,31}, {8,16,24,32} may be allocated as pilot tones.

In an 80 MHz bandwidth, a total of 64 pilot tones are defined in the tone plan of a 52-tone RRU, and four pilot tones are defined for each 52-tone RRU. Thus, pilot tones may be selected in units of 16 and allocated to each 52-tone DRU. That is, for each of the sixteen 52-tone DRUs, one of {1,17,33,49}, {2,18,34,50}, {3,19,35,51}, {4,20,36,52}, {5,21,37,53}, {6,22,38,54}, {7,23,39,55}, {8,24,40,56}, {9,25,41,57}, {10,26,42,58}, {11,27,43,59}, {12,28,44,60}, {13,29,45,61}, {14,30,46,62}, {15,31,47,63}, {16,32,48,64} may be allocated as pilot tones.

In a 160 MHz bandwidth, a total of 128 pilot tones are defined in the tone plan of a 52-tone RRU, and four pilot tones are defined for each 52-tone RRU. Thus, pilot tones may be selected in units of 32 and allocated to each 52-tone DRU. That is, for each of the thirty-two 52-tone DRUs, one of {1,33,65,97}, {2,34,66,98}, {3,35,67,99}, {4,36,68,100}, {5,37,69,101}, {6,38,70,102}, {7,39,71,103}, {8,40,72,104}, {9,41,73,105}, {10,42,74,106}, {11,43,75,107}, {12,44,76,108}, {13,45,77,109}, {14,46,78,110}, {15,47,79,111}, {16,48,80,112}, {17,49,81,113}, {18,50,82,114}, {19,51,83,115}, {20,52,84,116}, {21,53,85,117}, {22,54,86,118}, {23,55,87,119}, {24,56,88,120}, {25,57,89,121}, {26,58,90,122}, {27,59,91,123}, {28,60,92,124}, {29,61,93,125}, {30,62,94,126}, {31,63,95,127}, {32,64,96,128} may be allocated as pilot tones.

When the allocation of pilot tones for each bandwidth is expressed in a general equation, each pilot tone belongs to the nth 52-tone DRU, and n may be "mod(pilot tone index-1,a)+1", where a may be the number of 52-tone DRUs (or the index gap of pilot tones allocated to one DRU). Here, mod() denotes a modulo operation. In this case, the pilot-tone combinations listed above may be allocated sequentially from the first DRU. Additionally, a may be replaced with another number such as the number of 52-tone DRUs minus one or plus one, and the "+1" at the end of the expression may be replaced with another number such as "+2" or "+3".

Additionally or alternatively, pilot tones may be allocated according to the formula "n = mod(mod(pilot tone index-1, a) + b-1, a) + 1". Here, a may be the number of 52-tone DRUs (or the index gap of pilot tones allocated to one DRU), and b may be a specific integer. For example, when b is one, the pilot tone combinations listed above are allocated starting from the first DRU; when b is two, the allocation begins from the second DRU; and when b is three, the allocation begins from the third DRU based on a cyclic shift. That is, when b is one, the last pilot tone combination may be allocated to the last DRU; when b is two, to the first DRU; and when b is three, to the second DRU.

Next, a method of allocating pilot tones for a 106-tone DRU is described.

In a 20 MHz bandwidth, since a total of 8 pilot tones are defined in the tone plan of a 106-tone RRU and four pilot tones are defined for each 106-tone RRU, pilot tones may be selected in units of two and allocated to each 106-tone DRU. That is, for each of the two 106-tone DRUs, one of {1,3,5,7} or {2,4,6,8} may be allocated as pilot tones.

In a 40 MHz bandwidth, since a total of 16 pilot tones are defined in the tone plan of a 106-tone RRU and four pilot tones are defined for each 106-tone RRU, pilot tones may be selected in units of four and allocated to each 106-tone DRU. That is, for each of the four 106-tone DRUs, one of {1,5,9,13}, {2,6,10,14}, {3,7,11,15}, or {4,8,12,16} may be allocated as pilot tones.

In an 80 MHz bandwidth, since a total of 32 pilot tones are defined in the tone plan of a 106-tone RRU and four pilot tones are defined for each 106-tone RRU, pilot tones may be selected in units of eight and allocated to each 106-tone DRU. That is, for each of the eight 106-tone DRUs, one of {1,9,17,25}, {2,10,18,26}, {3,11,19,27}, {4,12,20,28}, {5,13,21,29}, {6,14,22,30}, {7,15,23,31}, or {8,16,24,32} may be allocated as pilot tones.

In a 160 MHz bandwidth, since a total of sixty-four pilot tones are defined in the tone plan of a 106-tone RRU and four pilot tones are defined for each 106-tone RRU, pilot tones may be selected in units of sixteen and allocated to each 106-tone DRU. That is, for each of the sixteen 106-tone DRUs, one of {1,17,33,49}, {2,18,34,50}, {3,19,35,51}, {4,20,36,52}, {5,21,37,53}, {6,22,38,54}, {7,23,39,55}, {8,24,40,56}, {9,25,41,57}, {10,26,42,58}, {11,27,43,59}, {12,28,44,60}, {13,29,45,61}, {14,30,46,62}, {15,31,47,63}, or {16,32,48,64} may be allocated as pilot tones.

When expressing pilot-tone allocation for each bandwidth in a general equation, each pilot tone belongs to the n-th 106-tone DRU, and n may be "mod(pilot tone index-1,a)+1," where a may be the number of 106-tone DRUs (or the index gap of pilot tones allocated to one DRU). Here, mod() denotes a modulo operation. In this case, the pilot tone combinations listed above may be allocated sequentially from the first DRU. Additionally, a number other than the number of 106-tone DRUs, such as the number of 106-tone DRUs -1 or the number of 106-tone DRUs +1, may be used for a, and a number other than +1, such as +2 or +3, may replace the +1 in the last part of the equation.

Additionally or alternatively, pilot tones may be allocated by the equation "n = mod(mod(pilot tone index-1,a)+b-1,a)+1." Here, a may be the number of 106-tone DRUs (or the index gap of pilot tones allocated to one DRU), and b may be a specific integer. For example, when b is one, the pilot tone combinations listed above are allocated starting from the first DRU; when b is two, allocation begins from the second DRU; and when b is three, allocation starts from the third DRU in order, based on a cyclic shift. That is, when b is one, the last pilot tone combination is allocated to the last DRU; when b is two, it is allocated to the first DRU; and when b is three, it is allocated to the second DRU.

Next, a method for allocating pilot tones for a two-hundred-forty-two-tone DRU is described.

In a 40 MHz bandwidth, since a total of **16 pilot tones** are defined in the tone plan of a 242-tone RRU and **eight pilot tones** are defined for each 242-tone RRU, pilot tones may be selected in units of **2** and allocated to each 242-tone DRU. That is, for each of the **two** 242-tone DRUs, one of {1,3,5,7,9,11,13,15} or {2,4,6,8,10,12,14,16} may be allocated as pilot tones.

In an 80 MHz bandwidth, since a total of 32 pilot tones are defined in the tone plan of a 242-tone RRU and eight pilot tones are defined for each 242-tone RRU, pilot tones may be selected in units of 4 and allocated to each 242-tone DRU. That is, for each of the four 242-tone DRUs, one of {1,5,9,13,17,21,25,29}, {2,6,10,14,18,22,26,30}, {3,7,11,15,19,23,27,31}, or {4,8,12,16,20,24,28,32} may be allocated as pilot tones.

In a 160 MHz bandwidth, since a total of 64 pilot tones are defined in the tone plan of a 242-tone RRU and eight pilot tones are defined for each 242-tone RRU, pilot tones may be selected in units of 8 and allocated to each 242-tone DRU. That is, for each of the eight 242-tone DRUs, one of {1,9,17,25,33,41,49,57}, {2,10,18,26,34,42,50,58}, {3,11,19,27,35,43,51,59}, {4,12,20,28,36,44,52,60}, {5,13,21,29,37,45,53,61}, {6,14,22,30,38,46,54,62}, {7,15,23,31,39,47,55,63}, or {8,16,24,32,40,48,56,64} may be allocated as pilot tones.

Expressed as a general equation for pilot tone allocation in each bandwidth, each pilot tone belongs to the n-th 242-tone DRU, and n may be "mod(pilot tone index-1, a)+1," where a may be the number of 242-tone DRUs (or the index gap of pilot tones allocated to one DRU). Here, mod() denotes a modulo operation. In this case, the pilot tone combinations listed above may be allocated sequentially starting from the first DRU. Additionally, a may be replaced with other numbers, such as the number of 242-tone DRUs minus one or the number of 242-tone DRUs plus one, and the value "+1" at the end of the expression may alternatively be "+2," "+3," or other values.

Additionally or alternatively, pilot tones may be allocated according to the formula "n = mod(mod(pilot tone index-1, a)+b-1, a)+1." Here, a may be the number of 242-tone DRUs (or the index gap of pilot tones allocated to one DRU), and b may be a certain integer. For example, when b is 1, the pilot tone combinations listed above are allocated starting from the first DRU; when b is 2, they are allocated starting from the second DRU; and when b is 3, they are allocated starting from the third DRU in a cyclic-shift manner. That is, when b is 1, the last pilot-tone combination is allocated to the last DRU; when b is 2, it is allocated to the first DRU; and when b is 3, it is allocated to the second DRU.

Next, a method for allocating pilot tones to a 484-tone DRU is described.

In an 80-MHz bandwidth, since a tone plan of a 484-tone RRU defines a total of 32 pilot tones and each 484-tone RRU includes 16 pilot tones, pilot tones may be selected in units of 2 and allocated to each 484-tone DRU. That is, for each two of 484-tone DRUs, one of {1,3,5,7,9,11,13,15,17,19,21,23,25,27,29,31} or {2,4,6,8,10,12,14,16,18,20,22,24,26,28,30,32} may be allocated as pilot tones.

In a 160-MHz bandwidth, since a tone plan of a 484-tone RRU defines a total of 64 pilot tones and each 484-tone RRU includes 16 pilot tones, pilot tones may be selected in units of 4 and allocated to each 484-tone DRU. That is, for each group of four 484-tone DRUs, one of {1,5,9,13,17,21,25,29,33,37,41,45,49,53,57,61}, {2,6,10,14,18,22,26,30,34,38,42,46,50,54,58,62}, {3,7,11,15,19,23,27,31,35,39,43,47,51,55,59,63}, or {4,8,12,16,20,24,28,32,36,40,44,48,52,56,60,64} may be allocated as pilot tones.

In a general expression for allocating pilot tones in each bandwidth, each pilot tone belongs to the n-th 484-tone DRU, where n may be "mod(pilot tone index - 1, a) + 1," and a may be the number of 484-tone DRUs (or the pilot-tone index gap assigned to one DRU). Here, mod() denotes a modulo operation. In this case, the pilot tone combinations listed above may be allocated sequentially from the first DRU. Additionally, a may be replaced with another number such as the number of 484-tone DRUs -1 or the number of 484-tone DRUs +1, and the value "+1" at the end of the expression may alternatively be replaced with another number such as +2 or +3.

Additionally or alternatively, pilot tones may be allocated according to the expression "n = mod(mod(pilot tone index - 1, a) + b - 1, a) + 1." Here, a may be the number of 484-tone DRUs (or the pilot-tone index gap assigned to one DRU), and b may be a particular integer constant. For example, when b is 1, the pilot tone combinations listed above may be allocated starting from the first DRU; when b is 2, the allocation may start from the second DRU; and when b is 3, the allocation may proceed in a cyclic-shift manner starting from the third DRU. That is, when b is 1, the last pilot tone combination may be allocated to the last DRU; when b is 2, it may be allocated to the first DRU; and when b is 3, it may be allocated to the second DRU.

Next, a method for allocating pilot tones to a 996-tone DRU is described.

In a 160 MHz bandwidth, since a tone plan of a 996-tone RRU defines a total of 32 pilot tones and each 996-tone RRU includes sixteen pilot tones, pilot tones may be selected in units of 2 and allocated to each 996-tone DRU. That is, for each two 996-tone DRUs, one of {1,3,5,7,9,11,13,15,17,19,21,23,25,27,29,31} or {2,4,6,8,10,12,14,16,18,20,22,24,26,28,30,32} may be allocated as the pilot tones.

In a general expression for allocating pilot tones in each bandwidth, each pilot tone belongs to the n-th 996-tone DRU, where n may be "mod(pilot tone index - 1, a) + 1," and a may be the number of 996-tone DRUs (or the pilot-tone index gap assigned to one DRU). Here, mod() denotes a modulo operation. In this case, the pilot tone combinations listed above may be allocated sequentially starting from the first DRU. Additionally, a may be replaced with another number such as the number of 996-tone DRUs -1 or the number of 996-tone DRUs +1, and the value "+1" at the end of the expression may alternatively be replaced with another number such as +2 or +3.

Additionally or alternatively, pilot tones may be allocated according to the expression "n = mod(mod(pilot tone index - 1, a) + b - 1, a) + 1." Here, a may be the number of 996-tone DRUs (or the pilot-tone index gap assigned to one DRU), and b may be a particular integer constant. For example, if b is 1, the pilot tone combinations listed above may be allocated starting from the first DRU; if b is 2, allocation may begin from the second DRU; and if b is 3, allocation may begin from the third DRU in a cyclic-shift manner. That is, if b is 1, the last pilot tone combination may be allocated to the last DRU; if b is 2, to the first DRU; and if b is 3, to the second DRU.

A pilot tone whose order corresponds to the DRU index may be allocated as the first pilot tone, although this is not limiting.

This method may not be straightforward to implement because, for DRUs of certain sizes (e.g., size 52 or greater), the pilot tones may not be constructed based on the pilot tones of the next smaller DRUs that constitute them. Additionally, when DRUs of different sizes are used within a single PPDU, pilot tones may overlap across DRUs. To overcome such issues, a method such as method 2-4 may be considered.

### (Method 2-4)

Pilot tones that are evenly distributed may be allocated in a 26-tone DRU. In addition, a larger-size DRU may be constructed by combining two different one-step smaller DRUs (and null tones in the case of 106-tone/242-tone/996-tone DRU construction, and a 26-tone DRU in the case of 242-tone DRU construction), and the pilot tones of the larger-size DRU may be formed from the pilot tones used in the one-step smaller DRUs.

This method may be based on the approach described in the present disclosure in which a larger-size DRU is constructed using one-step smaller DRUs (e.g., the DRU combination methods shown in Table 4 through Table 7).

Based on this, the pilot tone allocation method for a 26-tone DRU described in method 2-3 above may be applied as is. Additionally, in order for the pilot tones to be evenly distributed in a larger-size DRU, it may be preferable to allocate, in order, the pilot tone combinations listed per bandwidth in method 2-3 starting from the 26-tone DRU having the lowest index.

For a 52-tone DRU, the pilot tones of the two 26-tone DRUs used in the combination may be used as they are.

For a 106-tone DRU, the pilot tones of the two 52-tone DRUs used in the combination may be used as they are, except that **four pilot tones** may be converted into data tones. When indices **one through eight** are assigned sequentially starting from the pilot tone at the lowest-frequency position, the tones converted into data tones may be the **odd-indexed tones,** or the **even-indexed tones,** or the odd-indexed tones among indices one through four and the even-indexed tones among indices five through eight, or the even-indexed tones among indices one through four and the odd-indexed tones among indices five through eight.

For a 242-tone DRU, the pilot tones of the two 106-tone DRUs used in the combination may be used as they are, and the pilot tones of the 26-tone DRU used in the combination may be converted into data tones. Alternatively, when the pilot tones of the smaller DRUs used in the combination are arranged in order from the lowest-frequency pilot tone, the **lowest pilot tone and the highest pilot tone** may be converted into data tones, or the **two center pilot tones** may be converted into data tones. From an implementation perspective, it may be preferable to convert the pilot tones of the 26-tone DRU used in the combination into data tones.

For a 484-tone DRU, the pilot tones of the two 242-tone DRUs used in the combination may be used as they are.

For a 996-tone DRU, the pilot tones of the two 484-tone DRUs used in the combination may be used as they are, and sixteen of them may be converted into data tones. When indices one through thirty-two are assigned sequentially starting from the pilot tone at the lowest-frequency position, the tones converted into data tones may be the odd-indexed tones, or the even-indexed tones, or the odd-indexed tones among indices one through sixteen and the even-indexed tones among indices seventeen through thirty-two, or the even-indexed tones among indices one through sixteen and the odd-indexed tones among indices seventeen through thirty-two. When distributed pilot tones are considered from a performance perspective, the last method may be effective.

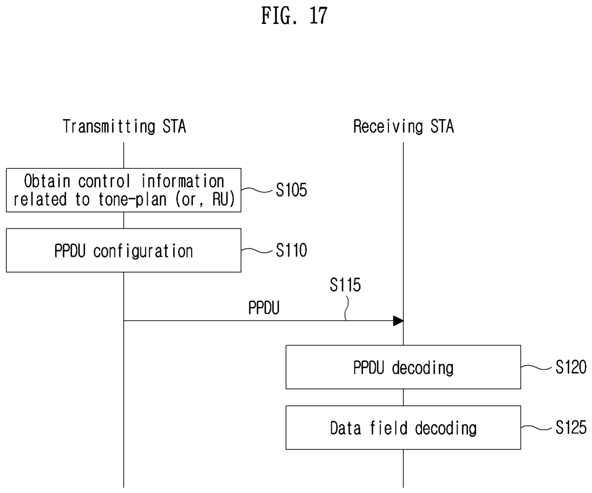

FIG. 17 is a diagram for explaining a PPDU transmission and reception procedure between a transmitting STA and a receiving STA according to one embodiment of the present disclosure. Some step(s) shown in FIG. 16 may be omitted depending on circumstances and/or settings. The transmitting device and the receiving STA may be an AP and/or a non-AP STA.

The transmitting STA may acquire control information related to the above-described tone plan (or RU/DRU) (S105). The control information related to the tone plan may include information for the size and position of the RU, control information related to the RU, information for the frequency band in which the RU is included, and information for the STA receiving the RU.

The transmitting STA may construct/generate a PPDU based on the acquired control information (S110). Constructing/generating a PPDU may mean constructing/generating each field of the PPDU. That is, the step of constructing/generating the PPDU may include a step of constructing/configuring an EHT-SIG-A/B/C field including the control information for the tone plan.

That is, the step of constructing/generating the PPDU may include a step of constructing/configuring a field including control information (e.g., an N bitmap) indicating the size/position of the RU and/or a step of constructing/configuring a field including an identifier (e.g., AID) of the STA receiving the RU.

Additionally, the step of constructing/generating the PPDU may include a step of generating an STF/LTF sequence transmitted through a specific RU. The STF/LTF sequence may be generated based on a pre-configured STF generation sequence/LTF generation sequence.

Additionally, the step of constructing/generating the PPDU may include a step of generating a data field (i.e., MPDU) transmitted through a specific RU.

The transmitting STA may transmit the constructed/generated PPDU to the receiving STA (S115).

Specifically, the transmitting STA may perform at least one of cyclic shift diversity (CSD), spatial mapping, inverse discrete Fourier transform (IDFT)/inverse fast Fourier transform (IFFT) operations, and guard interval (GI) insertion operations.

The receiving STA may decode the PPDU and acquire control information related to the tone plan (or RU) (S120).

Specifically, the receiving STA may decode the L-SIG and EHT-SIG of the PPDU based on the L-STF/LTF, and acquire the information included in the L-SIG and EHT-SIG fields. Information for various tone plans (i.e., RUs) of the present disclosure may be included in the EHT-SIG (EHT-SIG-A/B/C, etc.), and the receiving STA may acquire information for the tone plan (i.e., RU) through the EHT-SIG.

The receiving STA may decode the remaining portion of the PPDU based on the acquired information for the tone plan (i.e., RU) (S125). For example, the receiving STA may decode the STF/LTF fields of the PPDU based on the information for the tone plan (i.e., RU). In addition, the receiving STA may decode the data field of the PPDU based on the information for the tone plan (i.e., RU) and acquire the MPDU included in the data field.

The receiving STA may also perform a processing operation of delivering the decoded data to a higher layer (e.g., MAC layer). In addition, when signal generation is instructed from the higher layer to the PHY layer in response to the data delivered to the higher layer, the receiving STA may perform subsequent operations.

Unlike the conventional wireless LAN system that only applies RRU, in the case where the application of DRU is supported, the efficiency of resource utilization may be increased by transmitting/receiving one or more fields of PPDU based on the DRU tone plan of various sizes applicable to PPDU of 160MHz bandwidth according to the present disclosure. In addition, based on the pilot tone design/definition of DRU according to the present disclosure, effective CFO tracking using pilot tone may be possible. Based on this, there is an effect of improving coverage/throughput through smooth DRU transmission.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless local area network (WLAN) system, the method comprising:
generating a physical layer protocol data unit (PPDU) including one or more fields, the one or more fields being mapped to one or more distributed resource units (DRUs); and
transmitting the PPDU in a bandwidth to one or more second STAs,
wherein, based on the one or more DRUs including a 26-tone DRU, 26 tones included in the 26-tone DRU are distributedly allocated to a channel over which the PPDU is transmitted within the bandwidth,
wherein pilot tones of the 26-tone DRU correspond to tones at positions to which one of candidate shift values is applied to predefined pilot tone positions, and
wherein a number of the candidate shift values is determined based on a number of pilot tones of a largest-size DRU supported in the channel.

2. The method of claim 1, wherein:
the number of the candidate shift values is a value obtained by dividing the number of pilot tones of the largest-size DRU supported in the channel by 2.

3. The method of claim 1, wherein:
the predefined pilot tone positions correspond to one of (7th tone and 20th tone), (6th tone and 20th tone), or (7th tone and 21st tone) among the 26 tones.

4. The method of claim 1, wherein:
the 26-tone DRU is one of N predefined 26-tone DRUs for the channel,
nth (n=1, 2, ..., N) 26-tone DRU includes an nth lowest tone among available tones in the channel and is defined as every Nth tone based on the nth lowest tone, and
the available tones are tones excluding one or more of a direct current (DC) tone, a null tone, or a guard tone in the channel.

5. The method of claim 1, wherein:
wherein the candidate shift values are set to values within a range equal to or greater than -6 and equal to or less than +6.

6. The method of claim 1, wherein:
based on a size of the channel being 20 MHz, the number of the candidate shift values is 2,
based on a size of the channel being 40 MHz, the number of the candidate shift values is 4,
based on a size of the channel being 80 MHz, the number of the candidate shift values is 8, and
based on a size of the channel being 160 MHz, the number of the candidate shift values is 8.

7. The method of claim 6, wherein:
based on the channel being a 20 MHz channel, for 9 predefined 26-tone DRUs,
a first candidate shift value is defined to be applied to a first group including a 1st 26-tone DRU, a 2nd 26-tone DRU, a 3rd 26-tone DRU, and a 4th 26-tone DRU, and
a second candidate shift value is defined to be applied to a second group including a 6th 26-tone DRU, a 7th 26-tone DRU, a 8th 26-tone DRU, and a 9th 26-tone DRU.

8. The method of claim 7, wherein:
based on the one or more DRUs including a 52-tone DRU, the 52-tone DRU is one of 4 predefined 52-tone DRUs for the 20 MHz channel,
pilot tones of a 1st 52-tone DRU are a combination of pilot tones of a 1st 26-tone DRU and pilot tones of a 6th 26-tone DRU,
pilot tones of a 2nd 52-tone DRU are a combination of pilot tones of a 2nd 26-tone DRU and pilot tones of a 7th 26-tone DRU,
pilot tones of a 3rd 52-tone DRU are a combination of pilot tones of a 3rd 26-tone DRU and pilot tones of a 8th 26-tone DRU, and
pilot tones of a 4th 52-tone DRU are a combination of pilot tones of a 4th 26-tone DRU and pilot tones of a 9th 26-tone DRU.

9. The method of claim 7, wherein:
based on the one or more DRUs including a 106-tone DRU, the 106-tone DRU is one of 2 predefined 106-tone DRUs for the 20 MHz channel,
pilot tones of a 1st 106-tone DRU comprise 4 pilot tones among 8 pilot tones of odd-numbered 26-tone DRUs belonging to the first group and the second group, and
pilot tones of a 2nd 106-tone DRU comprise 4 pilot tones among 8 pilot tones of even-numbered 26-tone DRUs belonging to the first group and the second group.

10. The method of claim 9, wherein:
the 4 pilot tones of the pilot tones of the 1st 106-tone DRU are a combination of 2 pilot tones of one of 2 odd-numbered 26-tone DRUs belonging to the first group and 2 pilot tones of one of 2 odd-numbered 26-tone DRUs belonging to the second group, and
the 4 pilot tones of the pilot tones of the 2nd 106-tone DRU are a combination of 2 pilot tones of one of 2 even-numbered 26-tone DRUs belonging to the first group and 2 pilot tones of one of 2 even-numbered 26-tone DRUs belonging to the second group.

11. The method of claim 6, wherein:
based on the channel being a 40 MHz channel, for 18 predefined 26-tone DRUs,
a first candidate shift value is defined to be applied to a first group including a 1st 26-tone DRU, a 2nd 26-tone DRU, a 6th 26-tone DRU, and a 7th 26-tone DRU,
a second candidate shift value is defined to be applied to a second group including a 3rd 26-tone DRU, a 4th 26-tone DRU, a 8th 26-tone DRU, and a 9th 26-tone DRU,
a third candidate shift value is defined to be applied to a third group including a 10th 26-tone DRU, a 11th 26-tone DRU, a 15th 26-tone DRU, and a 16th 26-tone DRU, and
a fourth candidate shift value is defined to be applied to a fourth group including a 12th 26-tone DRU, a 13th 26-tone DRU, a 17th 26-tone DRU, and a 18th 26-tone DRU.

12. The method of claim 6, wherein:
based on the channel being a 80 MHz channel, for 36 predefined 26-tone DRUs,
a first candidate shift value is defined to be applied to a first group including a 1st 26-tone DRU, a 2nd 26-tone DRU, a 10th 26-tone DRU, and a 11th 26-tone DRU,
a second candidate shift value is defined to be applied to a second group including a 3rd 26-tone DRU, a 4th 26-tone DRU, a 12th 26-tone DRU, and a 13th 26-tone DRU,
a third candidate shift value is defined to be applied to a third group including a 6th 26-tone DRU, a 7th 26-tone DRU, a 15th 26-tone DRU, and a 16th 26-tone DRU,
a fourth candidate shift value is defined to be applied to a fourth group including a 8th 26-tone DRU, a 9th 26-tone DRU, a 17th 26-tone DRU, and a 18th 26-tone DRU,
a fifth candidate shift value is defined to be applied to a fifth group including a 19th 26-tone DRU, a 20th 26-tone DRU, a 28th 26-tone DRU, and a 29th 26-tone DRU,
a sixth candidate shift value is defined to be applied to a sixth group including a 21st 26-tone DRU, a 22nd 26-tone DRU, a 30th 26-tone DRU, and a 31st 26-tone DRU,
a seventh candidate shift value is defined to be applied to a seventh group including a 24th 26-tone DRU, a 25th 26-tone DRU, a 33rd 26-tone DRU, and a 34th 26-tone DRU, and
a eighth candidate shift value is defined to be applied to a eighth group including a 26th 26-tone DRU, a 27th 26-tone DRU, a 35th 26-tone DRU, and a 36th 26-tone DRU.

13. The method of claim 6, wherein:
based on the channel being a 160 MHz channel, for 72 predefined 26-tone DRUs,
a first candidate shift value is defined to be applied to a first group including a 1st 26-tone DRU, a 2nd 26-tone DRU, a 3rd 26-tone DRU, a 4th 26-tone DRU, a 19th 26-tone DRU, a 20th 26-tone DRU, a 21st 26-tone DRU, and a 22nd 26-tone DRU,
a second candidate shift value is defined to be applied to a second group including a 6th 26-tone DRU, a 7th 26-tone DRU, a 8th 26-tone DRU, a 9th 26-tone DRU, a 24th 26-tone DRU, a 25th 26-tone DRU, a 26th 26-tone DRU, and a 27th 26-tone DRU,
a third candidate shift value is defined to be applied to a third group including a 10th 26-tone DRU, a 11th 26-tone DRU, a 12th 26-tone DRU, a 13th 26-tone DRU, a 28th 26-tone DRU, a 29th 26-tone DRU, a 30th 26-tone DRU, and a 31st 26-tone DRU,
a fourth candidate shift value is defined to be applied to a fourth group including a 15th 26-tone DRU, a 16th 26-tone DRU, a 17th 26-tone DRU, a 18th 26-tone DRU, a 33rd 26-tone DRU, a 34th 26-tone DRU, a 35th 26-tone DRU, and a 36th 26-tone DRU,
a fifth candidate shift value is defined to be applied to a fifth group including a 37th 26-tone DRU, a 38th 26-tone DRU, a 39th 26-tone DRU, a 40th 26-tone DRU, a 55th 26-tone DRU, a 56th 26-tone DRU, a 57th 26-tone DRU, and a 58th 26-tone DRU,
a sixth candidate shift value is defined to be applied to a sixth group including a 42nd 26-tone DRU, a 43rd 26-tone DRU, a 44th 26-tone DRU, a 45th 26-tone DRU, a 60th 26-tone DRU, a 61st 26-tone DRU, a 62nd 26-tone DRU, and a 63rd 26-tone DRU,
a seventh candidate shift value is defined to be applied to a seventh group including a 46th 26-tone DRU, a 47th 26-tone DRU, a 48th 26-tone DRU, a 49th 26-tone DRU, a 64th 26-tone DRU, a 65th 26-tone DRU, a 66th 26-tone DRU, and a 67th 26-tone DRU, and
a eighth candidate shift value is defined to be applied to a eighth group including a 51st 26-tone DRU, a 52nd 26-tone DRU, a 53rd 26-tone DRU, a 54th 26-tone DRU, a 69th 26-tone DRU, a 70th 26-tone DRU, a 71st 26-tone DRU, and a 72nd 26-tone DRU.

14. A first station (STA) device in a wireless local area network (WLAN) system, the device comprising:
at least one transceiver; and
at least one processor connected to the at least one transceiver,
wherein the at least one processor is configured to:
generate a physical layer protocol data unit (PPDU) including one or more fields, the one or more fields being mapped to one or more distributed resource units (DRUs); and
transmit the PPDU in a bandwidth to one or more second STAs,
wherein, based on the one or more DRUs including a 26-tone DRU, 26 tones included in the 26-tone DRU are distributedly allocated to a channel over which the PPDU is transmitted within the bandwidth,
wherein pilot tones of the 26-tone DRU correspond to tones at positions to which one of candidate shift values is applied to predefined pilot tone positions, and
wherein a number of the candidate shift values is determined based on a number of pilot tones of a largest-size DRU supported in the channel.

15. A method performed by a second station (STA) in a wireless local area network (WLAN) system, the method comprising:
receiving, from a first STA, a physical layer protocol data unit (PPDU) including one or more field in a bandwidth; and
decoding the one or more field mapped on one or more distributed resource units (DRUs),
wherein, based on the one or more DRUs including a 26-tone DRU, 26 tones included in the 26-tone DRU are distributedly allocated to a channel over which the PPDU is received within the bandwidth,
wherein pilot tones of the 26-tone DRU correspond to tones at positions to which one of candidate shift values is applied to predefined pilot tone positions, and
wherein a number of the candidate shift values is determined based on a number of pilot tones of a largest-size DRU supported in the channel.

16. A second station (STA) device in a wireless local area network (WLAN) system, the device comprising:
at least one transceiver; and
at least one processor connected to the at least one transceiver,
wherein the at least one processor is configured to:
receive, from a first STA, a physical layer protocol data unit (PPDU) including one or more field in a bandwidth; and decode the one or more field mapped on one or more distributed resource units (DRUs),
wherein, based on the one or more DRUs including a 26-tone DRU, 26 tones included in the 26-tone DRU are distributedly allocated to a channel over which the PPDU is received within the bandwidth,
wherein pilot tones of the 26-tone DRU correspond to tones at positions to which one of candidate shift values is applied to predefined pilot tone positions, and
wherein a number of the candidate shift values is determined based on a number of pilot tones of a largest-size DRU supported in the channel.

17. A processing device configured to control a station (STA) in a wireless local area network (WLAN) system, the processing device comprising:
at least one processor; and
at least one computer memory operably connected to the at least one processor, and based on being executed by the at least one processor, storing instructions for performing a method according to any one of claim 1 to claim 13.

18. At least one non-transitory computer-readable medium storing at least one instruction, wherein:
the at least one instruction controls a device to perform a method according to any one of claim 1 to claim 13 in a wireless local area network (WLAN) system by being executed by at least one processor.
